(19) Europäisches Patentamt
European Patent Office
Office européen des brevets

(11) **EP 3 265 496 B1**

(12) **EUROPÄISCHE PATENTSCHRIFT**

(45) Veröffentlichungstag und Bekanntmachung des Hinweises auf die Patenterteilung:
**16.02.2022   Patentblatt 2022/07**

(21) Anmeldenummer: **16707784.1**

(22) Anmeldetag: **03.03.2016**

(51) Internationale Patentklassifikation (IPC):
**C08F 2/24** (2006.01)       **C08J 5/18** (2006.01)
**C08F 265/04** (2006.01)     **C08F 297/02** (2006.01)
**C09D 151/00** (2006.01)     **C08L 25/12** (2006.01)
**C08L 51/00** (2006.01)      **C08F 220/44** (2006.01)
**C08F 212/08** (2006.01)

(52) Gemeinsame Patentklassifikation (CPC):
(C-Sets verfügbar)
**C08F 2/24; C08F 212/08; C08F 220/44;**
**C08F 265/04; C08F 297/02; C08L 25/12;**
**C08L 51/003; C09D 151/003;** C08L 2207/53
(Forts.)

(86) Internationale Anmeldenummer:
**PCT/EP2016/054549**

(87) Internationale Veröffentlichungsnummer:
**WO 2016/139307 (09.09.2016 Gazette 2016/36)**

(54) **EFFIZIENTE AGGLOMERIEREND WIRKENDE COPOLYMERE**

EFFICIENT COPOLYMERS HAVING AN AGGLOMERATING EFFECT

COPOLYMÈRES EFFICACES À ACTION AGGLOMÉRANTE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **05.03.2015   EP 15157854**
**12.06.2015   EP 15171978**

(43) Veröffentlichungstag der Anmeldung:
**10.01.2018   Patentblatt 2018/02**

(73) Patentinhaber: **INEOS Styrolution Group GmbH**
**60325 Frankfurt (DE)**

(72) Erfinder:
• **WALKER, Roland**
**68259 Mannheim (DE)**
• **MICHELS, Gisbert**
**51375 Leverkusen (DE)**
• **BANASZAK, Brian J.**
**67117 Limburgerhof (DE)**
• **NIESSNER, Norbert**
**67159 Friedelsheim (DE)**

(74) Vertreter: **Jacobi, Markus Alexander Patentanwälte**
**Isenbruck Bösl Hörschler PartG mbB**
**Eastsite One**
**Seckenheimer Landstraße 4**
**68163 Mannheim (DE)**

(56) Entgegenhaltungen:
**WO-A1-2014/170407       WO-A1-2015/165810**

(52) Gemeinsame Patentklassifikation (CPC): (Forts.)

C-Sets
**C08F 265/04, C08F 220/56;**
**C08L 25/12, C08L 51/003, C08L 83/04;**
**C08L 51/003, C08L 25/12, C08L 83/04;**
**C09D 151/003, C08L 25/12**

**Beschreibung**

Die Erfindung betrifft agglomerierend wirkende Copolymere (C), erhalten durch ein erfindungsgemäßes Verfahren. Die Erfindung betrifft ferner ein Verfahren zur Herstellung von Pfropfcopolymeren (B), aufgebaut aus einer agglomerierten Pfropfgrundlage (B1) und mindestens einer Pfropfhülle (B2), dadurch erhaltene Pfropfcopolymere (B), thermoplastische Formmassen sowie die Verwendung der erfindungsgemäßen thermoplastischen Formmassen.

Kautschuk-Latices, wie sie zum Beispiel bei einer üblichen Homo- oder Copolymerisation von Butadien anfallen, enthalten im Allgemeinen Pfropf(co)polymer-Partikel mit einem mittleren Teilchendurchmesser in der Größenordnung von etwa 0,05 bis 0,6 $\mu$m. ABS-Polymere, die unter Verwendung von solchen Kautschuken hergestellt werden, zeigen im Allgemeinen eine geringe Zähigkeit. Es ist bekannt, dass Acrylnitril-Butadien-Styrol-Copolymere mit günstigeren Eigenschaften erhalten werden können, wenn man bei der Pfropfpolymerisation zur Herstellung der ABS-Polymere Kautschuklatices mit größeren Teilchen einsetzt. Es ist ebenfalls bekannt, dass die Teilchen eines in Emulsion hergestellten oder nach seiner Herstellung in Emulsion gebrachten Kautschuks durch Zugabe einer zweiten geeigneten Kautschukdispersion vergrößert werden können (Agglomeration).

H.-G. Keppler (Angew. Makromol. Chem. 2, 1968, Seiten 1 bis 25) beschreibt eine Untersuchung über die Agglomeration von Polymerlatices. In den beispielhaft durchgeführten Versuchen wird dabei als Substrat "S" ein Polybutadienkautschuk eingesetzt und als Agglomeriermittel "A" ein Copolymer aus Butadien, Styrol und Methacrylsäure. Gemäß Keppler werden bei der Agglomeration der Kautschuklatices im Allgemeinen bimodale Verteilungen erhalten. Ein Maximum der differentiellen Verteilungsfunktion bei kleinen Teilchendurchmessern enthält dabei den Teil der Primärteilchen, die nicht agglomeriert worden sind. Ein zweites Maximum umfasst die durch Agglomeration der Primärteilchen entstandenen Sekundärteilchen. Des Weiteren wird von Keppler erwähnt, dass die Verteilung der Sekundärteilchen typischerweise "häufig recht eng" ist. Bezüglich einer Steuerung der Teilchengrößenverteilung innerhalb der einzelnen Fraktionen des agglomerierten Kautschuklatex macht Keppler keine Aussage.

Die DE 10 2005 022 632 beschreibt einen teilchenförmigen Agglomerationslatex, eine damit agglomerierte Polybutadien-Kautschukdispersion und einen entsprechenden SAN-Pfropfkautschuk, sowie eine thermoplastische Formmasse aus SAN enthaltend den Pfropfkautschuk. Als Agglomerationslatex wird vorzugsweise ein Copolymer aus Ethylacrylat und Methacrylamid eingesetzt.

Besonders bevorzugt weist der Agglomerationslatex eine Uneinheitlichkeit U von $\leq$ 0,35 und einen $d_{50}$-Wert von 65 bis 150 nm auf. Weiterhin werden mit Hilfe des Agglomerationslatex hergestellte teilchenförmige Kautschuke mit einer bimodalen Teilchengrößenverteilung, enthaltend nicht-agglomerierte Teilchen und eine Fraktion agglomerierter Teilchen beschrieben. Die Fraktion agglomerierter Teilchen weist bevorzugt eine Uneinheitlichkeit U von $\leq$ 0,7 und besonders bevorzugt einen $d_{50}$-Wert von > 400 nm auf.

DE 10 2005 022 635 beschreibt einen Agglomerationslatex, insbesondere ein Copolymer aus Ethylacrylat und Methacrylamid, mit einer Uneinheitlichkeit U von $\leq$ 0,35 und einem dso-Wert von 80 bis 190 nm. Ein damit agglomerierter Emulsionskautschuk weist mindestens eine Fraktion agglomerierter Teilchen mit einer Uneinheitlichkeit U von < 0,35 auf, besonders bevorzugt < 0,30, und einen $d_{50}$-Wert von > 300 nm, bevorzugt > 400 nm, auf. Ferner wird ein Polybutadienkautschuk mit einer SAN-Pfropfauflage, enthaltend eine agglomerierte Kautschukfraktion mit einer Uneinheitlichkeit von 0,33 und einem $d_{50}$-Wert von 630 nm, beschrieben, sowie eine diesen enthaltende thermoplastische Formmasse.

EP-A 0 579 140 beschreibt ein teilchenförmiges Pfropfpolymer A aus:

A1: einer Pfropfgrundlage auf der Grundlage eines Polydienkautschuks A1 aus, bezogen auf A1,
A11: 70 bis 100 Gew.-% eines polymerisierbaren Diens und
A12: bis zu 30 Gew.-% eines copolymerisierbaren, ethylenisch ungesättigten Monomeren
mit einer ersten Pfropfhülle A2 aus, bezogen auf A2,
A21: 75 bis 99,8 Gew.-% mindestens eines $C_1$-$C_8$-Alkylacrylats A21,
A22: 0,1 bis 5 Gew.-% mindestens eines polyfunktionellen, vernetzend wirkenden Monomeren A22,
A23: 0,1 bis 20 Gew.-% mindestens eines eine oder mehrere saure oder basische Gruppen enthaltenden Monomeren A23, und einer zweiten Pfropfhülle A3, bestehend aus, bezogen auf A3,
A31: 40 bis 89,9 Gew.-% mindestens eines vinylaromatischen Monomeren A31,
A32: 10 bis 49,9 Gew.-% mindestens eines polaren, ethylenisch ungesättigten Monomeren A32,
A33: 0,1 bis 20 Gew.-% mindestens eines eine oder mehrere basische bzw. saure Gruppen enthaltenden Monomeren A33 und
A34: bis 5 Gew.-% mindestens eines polyfunktionellen, vernetzend wirkenden Monomeren A34, wobei A23 und A33 jeweils unterschiedliche Gruppen bedeuten.

Die mechanischen Eigenschaften, wie die Charpy-Kerbschlagzähigkeit, aber auch optische Eigenschaften, wie der Oberflächenglanz, der entsprechend dem vorgenannten Stand der Technik hergestellten Formmassen bzw. Formteile mit Styrol-Acrylnitril-Copolymeren sind weiterhin verbesserungsbedürftig.

Eine Aufgabe der vorliegenden Erfindung ist es, ein agglomerierend wirkendes Copolymer und eine Agglomerations-Latex-Zusammensetzung mit verbesserten physikalischen Eigenschaften bereitzustellen, um eine möglichst hohe Agglomerationsausbeute bei der Herstellung der Copolymere zu gewährleisten. Zudem sollen Formmassen mit darin enthaltenen Agglomerations-Latex-Zusammensetzungen bereitgestellt werden.

Die Aufgabe wird gelöst durch ein Pfropfcopolymer (B), aufgebaut aus:

(B1): einer agglomerierten Pfropfgrundlage (B1), erhalten durch:

(a) Polymerisation von mindestens einem ethylenisch ungesättigtem Monomer (B10) zu einer Pfropfgrundlage (B1a), und

(b) Agglomeration der unter (a) erhaltenen Pfropfgrundlage (B1a) durch Zugabe von 0,01 bis 5 Gew.-Teilen, bezogen auf 100 Gew.-Teile der Pfropfgrundlage (B1a), jeweils bezogen auf den Feststoffgehalt, mindestens eines agglomerierend wirkenden Copolymers (C), unter Erhalt von (B1),

(B2): mindestens einer Pfropfhülle aus mindestens einem ethylenisch ungesättigtem Monomer (B20), erhältlich durch Umsetzung der agglomerierten Pfropfgrundlage (B1) mit dem mindestens einem ethylenisch ungesättigtem Monomer (B20),

wobei das mindestens eine agglomerierend wirkende Copolymer (C) erhalten wird durch:

i) Polymerisation von (C1): 80 bis 99,9 Gew.-% von einem oder mehreren hydrophoben C1- bis C12-Alkylacrylaten oder C1- bis C12-Alkylmethacrylaten,

ii) Zugabe mindestens eines Emulgators (E),

iii) Zugabe und
Polymerisation von (C2): 0,1 bis 20 Gew.-% ein oder mehreren hydrophilen Comonomeren (Comonomer-Typen) ausgewählt aus der Gruppe bestehend aus Acrylamid, Methylacrylamid, Ethylacrylamid und n-Butylacrylamid,

wobei (C1) und (C2) 100 Gew.-% (bezogen auf C1 und C2) ergeben,
wobei die Zugabe von (C2) nach der Zugabe, insbesondere 2 bis 100 min nach der Zugabe, des Emulgators (E) im Schritt ii) erfolgt.

Die Aufgabe wird zudem gelöst durch ein agglomerierend wirkendes Copolymer (C), erhalten durch:

i) Polymerisation von (C1): 80 bis 99,9 Gew.-% ein oder mehreren hydrophoben $C_1$- bis $C_{12}$-Alkylacrylaten oder $C_1$- bis $C_{12}$-Alkylmethacrylaten,

ii) Zugabe (mindestens) eines Emulgators (E),

iii) Zugabe und
Polymerisation von (C2): 0,1 bis 20 Gew.-% von einem oder mehreren hydrophilen Comonomeren ausgewählt aus der Gruppe bestehend aus Acrylamid und Methacrylamid,

wobei (C1) und (C2) 100 Gew.-% ergeben,
wobei die Zugabe von (C2) nach der Zugabe, insbesondere 2 bis 100 min nach der Zugabe, von (E) im Schritt ii) erfolgt.

Das ethylenisch ungesättigte Monomer (B10) und das ethylenisch ungesättigte Monomer (B20) können auf unterschiedlichen Monomeren oder auf gleichen Monomeren basieren. Typische Monomere sind Butadien und Styrol.

In Schritt iii) kann die Polymerisation zeitgleich mit der weiteren Zugabe des Emulgators (E) erfolgen oder auch nach der Zugabe. Dies wird beispielsweise durch eine verzögerte Zugabe des für die Polymerisation von (C2) benötigten Initiators erzielt, während der Emulgator weiter zugegeben wird.

Zudem wird die Aufgabe durch ein Verfahren zur Herstellung des erfindungsgemäß erhaltenen Pfropfcopolymers (z.B. ABS) gelöst sowie durch eine thermoplastische Formmasse, enthaltend das erfindungsgemäß erhaltene Pfropfcopolymer und deren Verwendung.

Unter einem Pfropf(co)polymer gemäß der vorliegenden Erfindung kann ein Copolymer und ein Polymer verstanden werden, dessen Makromoleküle "aufgepfropfte" Seitenketten tragen, die entweder aus denselben Monomer-Molekülen wie die Hauptketten (Pfropfpolymer) oder aus davon verschiedenen Monomer-Molekülen gebildet sind. Dabei kann das Polymer bzw. Copolymer einen Kern und eine oder auch mehrere Pfropfhüllen aufweisen.

Unter agglomerierend gemäß der vorliegenden Erfindung kann eine Partikelvergrößerung, Teilchenvergrößerung oder ein "Stückigmachen" verstanden werden.

Bevorzugt weist die agglomerierte Pfropfgrundlage (B1) eine bimodale Teilchengrößenverteilung von einer Fraktion x) nicht agglomerierter Teilchen mit einem $d_{50}$-Wert im Bereich von 80 bis 120 nm und einer Fraktion y) agglomerierter Teilchen mit einem $d_{50}$-Wert im Bereich von 350 bis 550 nm auf. Die Pfropfgrundlage hat oftmals eine Polydispersität U von kleiner 0,35.

Bevorzugt weist das agglomerierend wirkende Copolymer (C) eine Polydispersität U von kleiner 0,27 und einen dso-Wert von 80 bis 180 nm auf.

Der mittlere Teilchendurchmesser $d_{50}$, der auch als $d_{50}$-Wert der integralen Massenverteilung bezeichnet wird, ist dabei als der Wert definiert, bei dem 50 Gew.-% der Teilchen einen kleineren und 50 Gew.-% der Teilchen einen größeren Durchmesser als der $d_{50}$-Wert aufweisen.

In der vorliegenden Anmeldung wird der gewichtsmittlere Teilchendurchmesser $d_{50}$ mit einer Scheibenzentri-fuge (z. B.: DC 24000 von CPS Instruments Inc. mit einer Rotationsgeschwindigkeit der Scheibe von 24000 UpM) bestimmt. Der gewichtsmittlere Teilchendurchmesser $d_w$ ist gemäß folgender Formel (siehe G. Lagaly, Dispersionen und Emulsionen: eine Einführung in die Kolloidik feinverteilter Stoffe einschließlich der Tonminerale, Darmstadt: Steinkopf-Verlag 1997, Seite 282, Formel 8.3b) definiert:

$$d_w = \text{Summe} ( n_i * d_i^4 ) / \text{Summe}( n_i * d_i^3 )$$

$n_i$: Anzahl der Partikel mit dem Durchmesser $d_i$

Die Uneinheitlichkeit U im Sinne der vorliegenden Anmeldung ist ein Maß für die Breite der Teilchengrößenverteilung innerhalb eines teilchenförmigen (Co)polymers bzw. einer Fraktion eines teilchenförmigen (Co)polymers. Die Uneinheitlichkeit wird im Sinne der vorliegenden Anmeldung definiert als

$$U =(d_{90}-d_{10})/d_{50}.$$

Je kleiner der Wert U ist, desto enger ist die Verteilung.

Pfropfgrundlage (B1a)

Unter einem ethylenisch ungesättigtem Monomer (B10) kann im Sinne der vorliegenden Erfindung entweder (B11) und/oder (B12) verstanden werden.

Als Komponente (B12), insbesondere Dien-Komponente, kann beispielsweise Isopren und/oder Butadien eingesetzt werden, bevorzugt wird Butadien eingesetzt.

Als Komponente (B11) kann alpha-Methylstyrol und/oder Styrol eingesetzt werden, bevorzugt wird nur Styrol eingesetzt.

Besonders bevorzugt wird unter einem ethylenisch ungesättigtem Monomer (B10) im Sinne der vorliegenden Erfindung mindestens ein Vinylaromat, insbesondere Styrol, und/oder ein mindestens ein Dien, insbesondere Butadien, verstanden. Häufig werden Butadien und Styrol als Monomere eingesetzt.

Für die Pfropfgrundlage (B1a) wird im Allgemeinen die Dien-Komponente (B12), insbesondere Butadien, in einer Menge von 79 bis 100 Gew.-%, vorzugsweise 76 bis 98 Gew.-%, und die Vinylaromatkomponente (B11), insbesondere Styrol, in einer Menge von 0 bis 21 Gew.-%, vorzugsweise 2 bis 14 Gew.-% eingesetzt.

Bevorzugt wird die Pfropfgrundlage (B1a) aus Butadien und Styrol in der vorgenannten Zusammensetzung gebildet.

Zur Herstellung der Pfropfgrundlage (B1a) werden die Komponenten (B12) und gegebenenfalls (B11) in wässriger Emulsion nach dem Fachmann im Prinzip bekannten Verfahren bei Temperaturen von im Allgemeinen 20 bis 100 °C, bevorzugt 50 bis 90 °C polymerisiert.

Bei der Polymerisation können die üblichen Emulgatoren, wie z.B. Alkalisalze von Alkyl- oder Arylsulfonsäuren, Alkylsulfate, Fettalkoholsulfonate, Salze höherer Fettsäuren mit 10 bis 30 Kohlenstoffatomen oder Harzseifen, verwendet werden. Bevorzugt setzt man die Natrium- oder Kaliumsalze von Alkylsulfonaten oder Fettsäuren mit 10 bis 18 Kohlenstoffatomen ein. Es ist günstig, den oder die Emulgatoren in einer Menge von 0,5 bis 5 Gew.-%, bevorzugt von 0,5 bis 2 Gew.-%, bezogen auf das Gesamtgewicht der für die Pfropfgrundlage (B1a) verwendeten Monomeren, einzusetzen. Im Allgemeinen wird bei einem Wasser/Monomer-Verhältnis von 2 : 1 bis 0,7 : 1 gearbeitet.

Als Polymerisationsinitiatoren dienen insbesondere die gebräuchlichen Persulfate wie Kaliumperoxodisulfat, geeignet sind jedoch auch Redoxsysteme. Die Mengen an Initiatoren, zum Beispiel 0,1 bis 1 Gew.-%, bezogen auf das Gesamtgewicht der zur Herstellung der Pfropfgrundlage (B1a) eingesetzten Monomeren, richtet sich nach dem gewünschten Molgewicht.

Als Polymerisationshilfsstoffe können die üblichen Puffersubstanzen, durch welche pH-Werte von bevorzugt 6 bis 10 eingestellt werden, zum Beispiel Natriumbicarbonat und Natriumpyrophosphat, sowie im Allgemeinen 0,1 bis 3 Gew.-% eines Molekulargewichtsreglers wie Mercaptane, Terpinol oder dimeres $\alpha$-Methylstyrol verwendet werden.

Die genauen Polymerisationsbedingungen, insbesondere Art, Dosierung und Menge des Emulgators werden innerhalb der oben angegebenen Bereiche so gewählt, dass die Pfropfgrundlage (B1a) einen wie nachstehend definierten dso-Wert aufweist, wie zum Beispiel in DE-A-2427960 beschrieben.

Bevorzugt weist die agglomerierte Pfropfgrundlage (B1) eine bimodale Teilchengrößenverteilung von einer Fraktion x) nicht agglomerierter Teilchen mit einem dso-Wert im Bereich von 80 bis 120 nm und einer Fraktion y) agglomerierter Teilchen mit einem $d_{50}$-Wert im Bereich von 350 bis 550 nm und einer Polydispersität U von kleiner 0,35 auf.

Besonders bevorzugt weist die Pfropfgrundlage (B1a) einen dso-Wert im Bereich von 80 bis 110 nm, besonders bevorzugt 85 bis 110 nm, auf.

Die Polydispersität U der Pfropfgrundlage (B1a) ist vorzugsweise kleiner 0,35, insbesondere kleiner 0,33. Bevorzugt ist eine Pfropfgrundlage mit einem dso-Wert im Bereich von 80 bis 120 nm und einer Polydispersität U von kleiner 0,35, insbesondere kleiner 0,33.

In der vorliegenden Anmeldung wird die Bestimmung des gewichtsmittleren Teilchendurchmessers $d_w$ mit Hilfe einer Scheibenzentrifuge (z.B.: DC 24000 von CPS Instruments Inc. mit einer Rotationsgeschwindigkeit der Scheibe von 24000 UpM) durchgeführt.

Die Summation der o.g. Formel wird vom kleinsten bis zum größten Durchmesser der Teilchengrößenverteilung durchgeführt. Es sollte erwähnt werden, dass für eine Teilchengrößenverteilung von Teilchen mit der gleichen Dichte, der volumenmittlere Teilchendurchmesser dv gleich dem gewichtsmittleren Teilchendurchmesser $d_w$ ist.

$d_{10}$ und $d_{90}$-Werte werden wie folgt definiert: $d_{10}$ ist der Durchmesser, bei welchem 10 Gew.-%. der Partikel kleiner sind als dieser Wert und $d_{90}$ ist der Durchmesser, bei dem 90 Gew.-% der Partikel kleiner sind als dieser Wert.

Die Uneinheitlichkeit oder Polydispersität U im Sinne der vorliegenden Anmeldung ist ein Maß für die Breite der Teilchengrößenverteilung innerhalb eines teilchenförmigen (Co)polymers bzw. einer Fraktion eines teilchenförmigen (Co)polymers. Die Polydispersität U wird im Sinne der vorliegenden Anmeldung definiert als $U = (d_{90}-d_{10})/d_{50}$. Je kleiner der Wert U ist, desto enger ist die Verteilung.

Agglomerierend wirkende Copolymere (C)

Vorzugsweise wird unter einem agglomerierend wirkenden Copolymer (C) im Sinne der vorliegenden Erfindung ein Polymer verstanden, aufgebaut aus mindestens einem oder mehreren hydrophoben $C_1$- bis $C_{12}$-Alkylacrylaten, $C_1$- bis $C_{12}$-Alkylmethacrylaten und/ oder einem oder mehreren hydrophilen Comonomere, ausgewählt aus der Gruppe bestehend aus Acrylamid und Methacrylamid.

Unter einem agglomerierend wirkenden Copolymer (C) kann im Sinne der vorliegenden Erfindung ein Copolymer verstanden werden, aufgebaut aus (C1) und (C2).

Als Monomere (C1) werden vorzugsweise $C_1$-$C_4$-Alkylacrylate oder auch deren Mischungen verwendet. Ethylacrylat wird als Monomer (C1) besonders bevorzugt.

Als Monomere (C2) werden vorzugsweise die hydrophilen Monomere Acrylamid und Methacrylamid verwendet. Methacrylamid wird als Monomer (C2) bevorzugt.

Zur Agglomeration der Pfropfgrundlage (B1a) wird eine agglomerierend wirkende Komponente (Copolymer (C)), also ein Copolymer aus (C1) ein- oder mehreren hydrophoben $C_1$- bis $C_{12}$-Alkylacrylaten oder $C_1$- bis $C_{12}$-Alkylmethacrylaten und (C2) ein oder mehreren hydrophilen Comonomeren, ausgewählt aus der Gruppe bestehend aus Acrylamid und Methacrylamid, eingesetzt.

Das agglomerierend wirkende Copolymer (C) weist erfindungsgemäß eine Polydispersität U von kleiner 0,27 und einen $d_{50}$-Wert von 80 bis 180 nm auf.

Die Zusammensetzung zum Erhalt des Copolymers (C) ist im Allgemeinen folgendermaßen:

(C1) 80 bis 99,9, bevorzugt 90 bis 99,9 Gew.-% der Komponente (C1) und
(C2) 0,1 bis 20, bevorzugt 0,1 bis 10 Gew.-% der Komponente (C2),

wobei die Summe der Monomeren (C1) und (C2) gerade 100 Gew.-% (der Komponente C) beträgt.

Als Monomere (C1) werden vorzugsweise $C_1$-$C_2$-Alkylacrylate oder auch deren Mischungen verwendet. Ethylacrylat wird als Monomer (C1) bevorzugt.

Als Monomer (C2) bevorzugt ist Methacrylamid.

Bevorzugt wird als Copolymer (C) ein Copolymer aus Ethylacrylat und Methacrylamid eingesetzt. Besonders bevorzugt ist ein Copolymer (C) aus 92 bis 98 Gew.-%, bezogen auf die Gesamtfeststoffe in (C), Ethylacrylat und 2 bis 8 Gew.-%, bezogen auf die Gesamtfeststoffe in (C), Methacrylamid. Ganz besonders bevorzugt ist ein Copolymer (C) aus 93 bis 97 Gew.-%, bezogen auf die Gesamtfeststoffe in (C), Ethylacrylat und 3 bis 7 Gew.-%, bezogen auf die Gesamtfeststoffe in (C), Methacrylamid.

Bevorzugt sind Copolymere (C) mit einem Molekulargewicht ($M_w$) von 30.000 bis 300.000 g/mol, wobei $M_w$ nach gängigen Verfahren bestimmt werden kann.

Besonders bevorzugt ist ein Copolymer (C), das einen Kern aufweist, der aus mindestens einem der als Komponente (C1) genannten hydrophoben Monomere aufgebaut ist, bevorzugt aus Ethylacrylat, wobei dieser Kern mit einem Copolymer gepfropft ist, das aus den Komponenten (C1) und (C2) aufgebaut ist. Bevorzugt handelt es ich bei dem Copolymer (C) demnach um ein Kern/Schale Polymer.

Bevorzugt weist das agglomerierend wirkende Copolymer (C) einen Kern und eine Schale auf, wobei

- der Kern aus (C1), insbesondere Ethylacrylat, besteht, und wobei
- die Schale aus 85 bis 99,9 Gew.-% (C1), insbesondere Ethylacrylat, und 0,1 bis 15 Gew.-% (C2), insbesondere Methacrylamid, besteht,

wobei (C1) und (C2) in der Schale 100 Gew.-% ergeben.

Bevorzugt machen der Kern 3 bis 20 Gew.-% und die Schale 80 bis 97 Gew.-% des agglomerierend wirkenden Copolymers aus, wobei die Gesamtmenge an Kern und Schale 100 Gew.-% ergibt.

Besonders bevorzugt ist das Copolymer (C) aufgebaut aus (bzw. besteht aus):

($c_{11}$) 5 bis 20 Gew.-%, bezogen auf die Gesamtmenge des Copolymers (C), eines oder mehrerer hydrophober Monomere (C1), bevorzugt Ethylacrylat, als Kern;
($c_{12}$) 80 bis 95 Gew.-%, bezogen auf die Gesamtmenge des Copolymers (C), einer auf den Kern aufgepfropften Schale aufgebaut aus

($c_{121}$) 93 bis 97 Gew.-%, bezogen auf die Gesamtmenge der die Schale bildenden Monomeren, mindestens eines hydrophoben Monomeren (C1), bevorzugt Ethylacrylat;
($c_{122}$) 3 bis 7 Gew.-%, bezogen auf die Gesamtmenge der die Schale bildenden Monomeren, mindestens eines hydrophilen Monomeren (C2), bevorzugt Methacrylamid.

Ganz besonders bevorzugt ist das Copolymer (C) aufgebaut aus (bzw. besteht aus):

($c_{11}$) 8 bis 12 Gew.-%, bezogen auf die Gesamtmenge des Copolymers (C), Ethylacrylat als Kern, und
($c_{12}$) 88 bis 92 Gew.-%, bezogen auf die Gesamtmenge des Copolymers (C), einer auf den Kern aufgepfropften Schale aufgebaut aus

($c_{121}$) 93 bis 97 Gew.-%, bezogen auf die Gesamtmenge der die Schale bildenden Monomere, Ethylacrylat und
($c_{122}$) 3 bis 7 % bezogen auf die Gesamtmenge der die Schale bildenden Monomere, Methacrylamid.

Die vorstehend genannten Ausführungsformen zum Copolymer (C) entsprechen vorzugsweise den Zusammensetzungen, um das agglomerierende Copolymer (C) durch Polymerisation zu erhalten.

Bevorzugt ist entsprechend ein Verfahren zur Herstellung der agglomerierend wirkenden Komponente (C), enthaltend Monomerkomponenten (C1) und (C2), insbesondere Ethylacrylat und Methacrylamid, bei dem man zunächst eine Teilmenge an (C1), insbesondere Ethylacrylat, polymerisiert (Bildung der Grundlage), sowie anschließend mindestens einen Emulgator (E) zugibt, gefolgt von der Zugabe und Polymerisation von (C2), insbesondere Methacrylamid. Dabei erfolgt die Zugabe zeitverzögert, d.h. mindestens 1s, insbesondere 2 min, nach der Zugabe des Emulgators (E). Besonders bevorzugt erfolgt die Zugabe 10 min nach der Zugabe des Emulgators (E). Unter der Zugabe (des Emulgators (E)) kann die erstmalige Zugabe, beispielsweise in einen Reaktor, verstanden werden.

Die Herstellung des erfindungsgemäß eingesetzten agglomerierend wirkenden Copolymers (C) erfolgt nach dem Fachmann bekannten Verfahren, besonders vorteilhaft durch Emulsionspolymerisation, wobei die vorstehend für die Pfropfgrundlage (B1) genannten Emulgatoren eingesetzt werden können.

Dabei werden erfindungsgemäß bevorzugt die Natrium- und Kaliumsalze von Alkylsulfonaten mit 10 bis 18 Kohlenstoffatomen eingesetzt.

Die Emulgatoren werden vorteilhaft in einer Menge von 0,5 bis 5 Gew.-% eingesetzt, bevorzugt 0,5 bis 2 Gew.-%, bezogen auf den Gesamtmonomergehalt des Copolymers (C).

Ein weiterer Gegenstand der Erfindung ist ein agglomerierend wirkendes Copolymer (C), erhalten durch:

i) Polymerisation von (C1): 80 bis 99,9 Gew.-% von einem oder mehreren hydrophoben $C_1$- bis $C_{12}$-Alkylacrylaten oder $C_1$- bis $C_{12}$-Alkylmethacrylaten,

ii) Zugabe eines Emulgators (E),

iii) Zugabe und
Polymerisation von (C2): 0,1 bis 20 Gew.-% von einem oder mehreren hydrophilen Comonomeren ausgewählt aus der Gruppe bestehend aus Acrylamid und Methacrylamid, wobei (C1) und (C2) 100 Gew.-% ergeben,

wobei die Zugabe von (C2) nach der Zugabe, insbesondere 2 bis 100 min nach der Zugabe, von (E) im Schritt ii) erfolgt.
Bevorzugt erhält man das mindestens eine agglomerierend wirkende Copolymer (C) durch

i) Polymerisation von (C1): 80 bis 99,9 Gew.-% von einem oder mehreren hydrophoben $C_1$- bis $C_{12}$-Alkylacrylaten oder $C_1$- bis $C_{12}$-Alkylmethacrylaten, insbesondere durch eine Emulsionspolymerisation

ii) Zugabe eines Emulgators (E), wobei der Emulgator ausgewählt ist aus der Gruppe bestehend aus Natrium- und Kaliumsalze von Alkylsulfonaten mit 10 bis 18 Kohlenstoffatomen, und

iii) Zugabe und
Polymerisation von (C2): 0,1 bis 20 Gew.-% von einem oder mehreren hydrophilen Comonomeren ausgewählt aus der Gruppe bestehend aus Acrylamid und Methacrylamid, wobei (C1) und (C2) 100 Gew.-% ergeben,

wobei die Zugabe von (C2) 2 bis 100 min, insbesondere 2 bis 60 min, nach der Zugabe von (E) im Schritt ii) erfolgt.
Bevorzugt erfolgt in Schritt iii) die Zugabe von (C2) 2 min nach der Zugabe von (E) im Schritt ii) und dauert 20 min an.
Bevorzugt erfolgt in Schritt iii) die Zugabe von (C2) 20 min nach der Zugabe von (E) im Schritt ii) und dauert bis zu 70 min an.
Besonders bevorzugt erfolgt in Schritt iii) die Zugabe von (C2) 25 min nach der Zugabe von (E) im Schritt ii) und dauert 30 bis 50 min an.
Unter "nach der Zugabe von (E)" wird im Sinne der vorliegenden Erfindung verstanden, dass nach dem Start der Zugabe zumindest einer Teilmenge der Gesamtmenge von (E) die Zugabe von (C2) mit zeitlicher Verzögerung erfolgt.
Bevorzugt wird das Copolymer (C) als wässrige Dispersion, als so genannter Agglomerationslatex, eingesetzt.
Bevorzugt weist das agglomerierend wirkende Copolymer (C) eine Polydispersität U von kleiner 0,26, besonders bevorzugt von kleiner 0,25 auf. Gemäß einer bevorzugten Ausführungsform liegt die Polydispersität U des agglomerierend wirkenden Copolymers (C) im Bereich von 0,26 bis 0,20, insbesondere im Bereich von 0,25 bis 0,21.
Bevorzugt weist das agglomerierend wirkende Copolymer (C) eine mittlere Teilchengröße, $d_{50}$-Wert von 110 bis 140 nm, besonders bevorzugt von 115 bis 140 nm, ganz besonders bevorzugt 120 bis 135 nm auf.
Gemäß einer bevorzugten Ausführungsform wird ein agglomerierend wirkendes Copolymer (C) mit einer Polydispersität U von kleiner 0,26, insbesondere von kleiner 0,25, und einem $d_{50}$-Wert von 110 bis 140 nm, insbesondere von 115 bis 140 nm, ganz besonders bevorzugt von 120 bis 135 nm, eingesetzt.
Gemäß einer weiteren bevorzugten Ausführungsform wird ein agglomerierend wirkendes Copolymer (C) mit einer Polydispersität U im Bereich von 0,26 bis 0,20, insbesondere im Bereich von 0,25 bis 0,21, und einem $d_{50}$-Wert von 100 bis 150, vorzugsweise 110 bis 140 nm, insbesondere von 115 bis 140 nm, ganz besonders bevorzugt von 120 bis 135 nm, eingesetzt.
Im Sinne der vorliegenden Anmeldung sind die vorgenannten Ausführungsformen miteinander kombinierbar.
Besonders bevorzugt eingesetzt wird ein Copolymer (C) aus 92 bis 98 Gew.-%, bezogen auf die Gesamtfeststoffe in (C), Ethylacrylat und 2 bis 8 Gew.-%, bezogen auf die Gesamtfeststoffe in (C), Methacrylamid, mit einer Polydispersität U von kleiner 0,26, insbesondere von kleiner 0,25, und einem dso-Wert von 110 bis 140 nm, insbesondere von 115 bis 140 nm, ganz besonders bevorzugt von 120 bis 135 nm.

Agglomeration der Pfropfgrundlage (B1a)

Die Agglomeration der Pfropfgrundlage (B1a) geschieht in der Regel durch Zugabe einer Dispersion des zuvor beschriebenen Copolymers (C). Die Konzentration des Copolymers (C) in der zur Agglomeration verwendeten Dispersion soll im allgemeinen zwischen 3 bis 60 Gew.-%, vorzugsweise zwischen 5 bis 40 Gew.-%, liegen. Häufig kommt eine wässrige Dispersion zum Einsatz.

Bei der Agglomeration werden in der Regel 0,1 bis 5 Gew.-Teile, vorzugsweise 0,5 bis 3 Gew.-Teile, der Dispersion des Copolymers (C) auf 100 Teile der Pfropfgrundlage (B1a), jeweils berechnet auf Feststoffe, eingesetzt.

Besonders bevorzugt wird die unter (a) erhaltenen Pfropfgrundlage (B1a) durch Zugabe von 2,0 bis 3 Gew.-Teilen, bezogen auf 100 Gew.-Teile der Pfropfgrundlage (B1a), jeweils bezogen auf den Feststoffgehalt, mit mindestens einem agglomerierend wirkendem Copolymer (C) agglomeriert.

Die Agglomeration wird im Allgemeinen bei einer Temperatur von 20 bis 120°C, bevorzugt von 30 bis 100°C, besonders bevorzugt von 30 bis 75°C, durchgeführt.

Die Zugabe von Komponente (C) kann auf einmal oder portionsweise, kontinuierlich oder mit einem Zulaufprofil über einen bestimmten Zeitraum erfolgen. Nach einer bevorzugten Ausführungsform erfolgt die Zugabe von (C) derart, dass pro Minute 1/1 bis 1/100, oftmals 1/2 bis 1/60, der Gesamtmenge von C eingetragen werden. Die Zeit der Agglomeration, d.h. die Zeit ab Beginn der Zugabe von (C) bis zum Start der nachfolgenden Pfropfcopolymerisation, beträgt bevorzugt von einer Minute bis mehrere Stunden, beispielsweise bis 2 Stunden, besonders bevorzugt von 10 bis 60 Minuten.

Gegebenenfalls können zur Agglomeration basische Elektrolyte in einer Menge von 1 bis 50 Gew.-% (bezogen auf 100 Gew.-% des Feststoffgehalts des Copolymers (C), zugesetzt werden. Als basische Elektrolyte kommen organische oder anorganische Hydroxide in Betracht. Anorganische Hydroxide kommen vor allem in Betracht. Bevorzugt werden Lithiumhydroxid, Natriumhydroxid oder Kaliumhydroxid, eingesetzt. Nach einer der besonders bevorzugten Ausführungsformen wird KOH als basischer Elektrolyt verwendet. Nach einer anderen bevorzugten Ausführungsform wird NaOH als basischer Elektrolyt eingesetzt. Es können aber auch Mischungen aus zwei oder mehr basischen Elektrolyten eingesetzt werden. Dies kann beispielsweise dann vorteilhaft sei, wenn das Wachstum der Kautschukpartikel genau gesteuert werden soll. So kann es zum Beispiel günstig sein, Mischungen aus LiOH mit KOH oder Mischungen aus LiOH mit NaOH einzusetzen. Mischungen aus KOH und NaOH zu verwenden, ist ebenfalls möglich und zählt zu einer weiteren bevorzugten Ausführungsform. Im Allgemeinen werden die Elektrolyte vor der Zugabe gelöst. Bevorzugtes Lösungsmittel ist die wässrige Phase.

Bevorzugt werden verdünnte Lösungen verwendet, zum Beispiel Lösungen mit einer Konzentration im Bereich von 0,001 bis 0,1, insbesondere von 0,001 bis 0,05, bevorzugt auch weniger als 0,03, beispielsweise weniger als 0,025 g basischer Elektrolyt/ml Lösungsmittel, insbesondere Wasser.

Die Zugabe der basischen Elektrolyte kann vor der Zugabe des Copolymers (C), gleichzeitig zusammen oder getrennt von diesem Copolymer oder nach Zugabe von (B1) erfolgen. Es ist auch möglich, die basischen Elektrolyten in der Dispersion von (C) vorzumischen.

Nach einer bevorzugten Ausführungsform erfolgt die Zugabe der basischen Elektrolyten vor der Zugabe des Agglomerationspolymers. In der Regel wird der basische Elektrolyt in einer Menge von 0,01 bis 4 Gew.-%, bevorzugt 0,05 bis 2,5, insbesondere 0,1 bis 1,5 Gew.-%, bezogen auf den (B1a) (Feststoff), eingesetzt.

Der pH-Wert während der Agglomerisation beträgt im Allgemeinen von 6 bis 13. Nach einer bevorzugten Ausführungsform beträgt der pH-Wert von 8 bis 13.

Agglomerierte Pfropfgrundlage (B1)

Bevorzugt kann die nach der Agglomeration erhaltene agglomerierte Pfropfgrundlage (B1) eine bimodale Teilchengrößenverteilung von Fraktionen x) und y) aufweisen , wobei x) eine Fraktion nicht agglomerierter Teilchen und y) eine Fraktion agglomerierter Teilchen mit einem $d_{50}$-Wert (mittlere Teilchengröße) im Bereich von 350 bis 550 nm und einer Polydispersität U von kleiner 0,28 ist. Die nicht agglomerierten Teilchen der Fraktion x) weisen im Allgemeinen einen dso-Wert im Bereich von 80 bis 120 nm auf.

Der Gewichtsanteil der Teilchen der Fraktion x) der nicht-agglomerierten Pfropfgrundlage (B1) beträgt im Allgemeinen 10 bis 40 Gew.-%, bevorzugt 10 bis 21 Gew.-%, und der Anteil der Teilchen der Fraktion y) 60 bis 90 Gew.-%, bevorzugt 79 bis 90 Gew.-%, in Bezug auf die Gesamtmasse der Teilchen, x) und y) ergeben zusammen 100 Gew.-%.

Bevorzugt weist die agglomerierte Pfropfgrundlage (B1) eine y) Fraktion agglomerierter Teilchen mit einem dso-Wert im Bereich von 350 bis 500 nm, besonders bevorzugt 350 bis 450 nm, ganz besonders bevorzugt 350 bis 400 nm, und/oder eine Polydispersität U von kleiner 0,27, insbesondere kleiner 0,26 auf.

Die erhaltene Dispersion der agglomerierten Pfropfgrundlage (B1) ist stabil und kann ohne weiteres gelagert und transportiert werden, ohne dass Koagulation eintritt.

Bevorzugt wird aus der agglomerierten Pfropfgrundlage (B1) das erfindungsgemäße Pfropfcopolymer (B) hergestellt.

Pfropfcopolymer (B)

Bevorzugt wird unter einem ethylenisch ungesättigtem Monomer (B20) im Sinne der vorliegenden Erfindung, Styrol, $\alpha$-Methylstyrol, Acrylnitril, Methylmethacrylat, insbesondere aber Styrol und Methylmethacrylat bzw. Acrylnitril, verstanden.

Unter einem ethylenisch ungesättigtem Monomer (B20) im Sinne der vorliegenden Erfindung wird auch (B21) und/oder (B22) verstanden.

Als Monomere (B21) werden vorzugsweise Styrol und/oder α-Methylstyrol verstanden. Styrol wird als Monomer (B21) bevorzugt.

Als Monomere (B22) werden vorzugsweise Acrylnitril und/oder Methylmethacrylat verstanden. Acrylnitril wird als Monomer (B22) bevorzugt.

Zur Herstellung der erfindungsgemäßen Pfropfcopolymere (B) wird die agglomerierte Pfropfgrundlage (B1) mit den Monomeren (B21) und (B22) gepfropft.

Das Pfropfcopolymer (B) enthält im Allgemeinen 40 bis 85, bezogen auf den Feststoffgehalt des Pfropfcopolymers (B), einer Pfropfgrundlage (B1) und 15 bis 60 Gew.-%, bezogen auf den Feststoffgehalt des Pfropfcopolymers B, mindestens einer Pfropfhülle (B2). Die Summe aus (B1) und (B2) ergibt 100 Gew.-%.

Die Pfropfhülle (B2) kann z.B. erhalten werden durch Umsetzung von (B21) 70 bis 90 Gew.-%, bevorzugt 75 bis 85 Gew.-%, an Styrol und/oder α-Methylstyrol, insbesondere Styrol, und (B22) 10 bis 30 Gew.-%, bevorzugt 15 bis 25 Gew.-%, Acrylnitril, Methacrylnitril und/oder Methylmethacrylat, insbesondere Acrylnitril, in Gegenwart der agglomerierten Pfropfgrundlage (B1). Die Summe aus (B21) und (B22) ergibt 100 Gew.-%.

Bevorzugte Pfropfhüllen (B2) sind aufgebaut aus: Copolymeren von Styrol und Acrylnitril, Copolymeren von α-Methylstyrol und Acrylnitril. Besonders bevorzugt sind es Copolymere aus Styrol und Acrylnitril.

Besonders bevorzugte Pfropfhüllen (B2) werden erhalten durch Umsetzung von 75 bis 85 Gew.-% Styrol und von 15 bis 25 Gew.-% Acrylnitril.

Die Pfropfhülle (B2) wird nach Durchführung der vorstehend beschriebenen Agglomeration der Pfropfgrundlage (B1), vorzugsweise durch ein Emulsionspolymerisationsverfahren, erzeugt.

Die Pfropfcopolymerisation zur Erzeugung der Pfropfhülle (B2) kann im gleichen System erfolgen wie die Emulsionspolymerisation zur Herstellung der Pfropfgrundlage (B1), wobei, falls nötig, weitere Emulgatoren sowie Hilfsstoffe zugegeben werden können. Das gemäß einer Ausführungsform der Erfindung aufzupfropfende Monomergemisch kann dem Reaktionsgemisch auf einmal, verteilt auf mehreren Stufen - beispielsweise zum Aufbau mehrerer Pfropfhüllen (Pfropfauflagen) - oder kontinuierlich während der Polymerisation zugegeben werden. Vorzugsweise können die Monomere (B21) und (B22), insbesondere Styrol und Acrylnitril, gleichzeitig zugegeben werden.

Die Pfropfhülle (B2) wird gemäß einer Ausführungsform der Erfindung in Gegenwart der nach dem oben beschriebenen Verfahren erhaltenen agglomerierten Pfropfgrundlage (B1) aus einem Monomergemisch, bestehend aus den Komponenten (B21) und (B22), insbesondere Styrol und Acrylnitril, polymerisiert. Dabei können die Monomere einzeln oder in Mischungen miteinander zugefügt werden. Beispielsweise kann man zunächst (B21) allein und danach eine Mischung aus (B21) und (B22) aufpfropfen.

Es ist vorteilhaft, diese Pfropfcopolymerisation in wässriger Emulsion unter den üblichen, vorstehend für die Pfropfgrundlage beschriebenen Bedingungen durchzuführen. Einzelheiten zur Durchführung der Pfropfreaktion sind dem Fachmann bekannt und werden zum Beispiel in DE-A 24 27 960 und EP-A 0 062 901 offenbart.

Bevorzugt ist das Pfropfcopolymer (B) aufgebaut aus:

(B1): einer agglomerierten Pfropfgrundlage (B1), aufgebaut aus: 40 bis 85 Gew.-%, bezogen auf den Feststoffgehalt des Pfropfcopolymers B, einer Pfropfgrundlage (B1a), wobei (B1) erhalten wird durch

(a) Polymerisation von mindestens einem ethylenisch ungesättigtem Monomer (B10) zu einer Pfropfgrundlage (B1a), und

(b) Agglomeration der unter (a) erhaltenen Pfropfgrundlage (B1a) durch Zugabe von 0,01 bis 5 Gew.-Teilen, bezogen auf 100 Gew.-Teile der Pfropfgrundlage (B1a), jeweils bezogen auf den Feststoffgehalt, mindestens eines agglomerierend wirkenden Copolymers (C), unter Erhalt von (B1),

(B2): 15 bis 60 Gew.-%, bezogen auf den Feststoffgehalt des Pfropfcopolymers (B), einer Pfropfhülle aus mindestens einem ethylenisch ungesättigtem Monomer (B20), erhalten durch Umsetzung der agglomerierten Pfropfgrundlage (B1) mit dem mindestens einem ethylenisch ungesättigtem Monomer (B20),

wobei die Gesamtsumme aus Pfropfgrundlage (B1a) und Pfropfhülle (B2) 100 Gew.-% ergibt,
wobei das mindestens eine agglomerierend wirkende Copolymer (C) erhalten wird durch

i) Polymerisation von (C1): 80 bis 99,9 Gew.-% ein oder mehreren hydrophoben $C_1$- bis $C_{12}$-Alkylacrylaten oder $C_1$- bis $C_{12}$-Alkylmethacrylaten,

ii) Zugabe mindestens eines Emulgators (E),

iii) Zugabe und Polymerisation von (C2): 0,1 bis 20 Gew.-% ein oder mehreren hydrophilen Comonomeren ausgewählt aus der Gruppe bestehend aus Acrylamid und Methacrylamid, wobei (C1) und (C2) 100 Gew.-% ergeben,

wobei die Zugabe von (C2) 2 bis 100 min nach der Zugabe von (E) im Schritt ii) erfolgt.

Bevorzugt sind die Mengen der Komponenten (B1), (B1a), (C), (B2) jeweils bezogen auf ihre Feststoffgehalte.

Besonders bevorzugt ist das Pfropfcopolymer (B) aufgebaut aus:

(B1): einer agglomerierten Pfropfgrundlage (B1), aufgebaut aus: 40 bis 85 Gew.-%, bezogen auf den Feststoffgehalt des Pfropfcopolymers (B), einer Pfropfgrundlage (B1a), wobei (B1) erhalten wird durch

(a) Polymerisation von:

(B11): 0 bis 10 Gew.-% oder 0 bis 21 Gew.-%, insbesondere 1 bis 10 Gew.-% oder 1 bis 21 Gew.-% bezogen auf die Pfropfgrundlage (B1a), mindestens eines Vinylaromats, insbesondere Styrol, und

(B12): 90 bis 100 Gew.-% oder 79 bis 100 Gew.-%, insbesondere 90 bis 99 Gew.-% oder 79 bis 99 Gew.-%, bezogen auf die Pfropfgrundlage (B1a), mindestens eines Diens, insbesondere Butadien,

wobei (B11) und (B12) 100 Gew.-% ergeben, und

(b) Agglomeration der unter (a) erhaltenen Pfropfgrundlage (B1a) durch Zugabe von 0,01 bis 5 Gew.-Teilen, bezogen auf 100 Gew.-Teile der Pfropfgrundlage (B1a), jeweils bezogen auf den Feststoffgehalt, mindestens eines agglomerierend wirkendem Copolymers (C), unter Erhalt von (B1), wobei (C) aufgebaut ist aus:

(C1): 80 bis 99,9 Gew.-% ein oder mehreren hydrophoben $C_1$-bis $C_{12}$-Alkylacrylaten oder $C_1$- bis $C_{12}$-Alkylmethacrylaten und

(C2): 0,1 bis 20 Gew.-% ein oder mehreren hydrophilen Comonomeren ausgewählt aus der Gruppe bestehend aus Acrylamid und Methacrylamid,

wobei (C1) und (C2) 100 Gew.-% ergeben;

(B2): 15 bis 60 Gew.-%, bezogen auf den Feststoffgehalt des Pfropfcopolymers (B), einer Pfropfhülle aus mindestens einem ethylenisch ungesättigtem Monomer (B20), wobei (B20) eine Mischung aus den Monomeren (B21) und (B22) umfasst,

erhalten durch Umsetzung der agglomerierten Pfropfgrundlage (B1) mit einer Mischung aus:

(B21) 70 bis 90 Gew.-%, bezogen auf die Pfropfhülle (B2), Styrol und/oder $\alpha$-Methylstyrol, insbesondere Styrol, und

(B22) 10 bis 30_Gew.-%, bezogen auf die Pfropfhülle (B2), Acrylnitril und/oder Methylmethacrylat, insbesondere Acrylnitril,

wobei die Gesamtsumme aus Pfropfgrundlage (B1a) und Pfropfhülle (B2) 100 Gew.-% ergibt,

wobei das agglomerierend wirkende Copolymer (C) erhalten wird durch

i)

Polymerisation von (C1): 80 bis 99,9 Gew.-% ein oder mehreren hydrophoben $C_1$- bis $C_{12}$-Alkylacrylaten oder $C_1$- bis $C_{12}$-Alkylmethacrylaten,

ii) Zugabe mindestens eines Emulgators (E),

iii)

| | |
|---|---|
| Zugabe und Polymerisation von (C2): | 0,1 bis 20 Gew.-% ein oder mehreren hydrophilen Comonomeren ausgewählt aus der Gruppe bestehend aus Acrylamid und Methacrylamid, wobei (C1) und (C2) 100 Gew.-% ergeben, |

wobei die Zugabe von (C2) 2 bis 100 min nach der Zugabe von (E) im Schritt ii) erfolgt.

Bevorzugt besteht das Pfropfcopolymer (B) aus:

(B1): einer agglomerierten Pfropfgrundlage (B1), aufgebaut aus: 40 bis 85 Gew.-%, bezogen auf den Feststoffgehalt des Pfropfcopolymers (B), einer Pfropfgrundlage (B1a), wobei (B1) erhalten wird durch

(a) Polymerisation von:

(B11): 0 bis 10 Gew.-% oder 0 bis 21 Gew.-%, insbesondere 1 bis 10 Gew.-% oder 1 bis 21 Gew.-% bezogen auf die Pfropfgrundlage (B1a), mindestens eines Vinylaromats, insbesondere Styrol, und
(B12): 90 bis 100 Gew.-% oder 79 bis 100 Gew.-%, insbesondere 90 bis 99 Gew.-% oder 79 bis 99 Gew.-% bezogen auf die Pfropfgrundlage (B1a), mindestens eines Diens, insbesondere Butadien,

wobei (B11) und (B12) 100 Gew.-% ergeben, und

(b) Agglomeration der unter (a) erhaltenen Pfropfgrundlage (B1a) durch Zugabe von 0,01 bis 5 Gew.-Teilen, bezogen auf 100 Gew.-Teile der Pfropfgrundlage (B1a), jeweils bezogen auf den Feststoffgehalt, mindestens eines agglomerierend wirkenden Copolymers (C), unter Erhalt von (B1), wobei (C) aufgebaut ist aus:

(C1): 80 bis 99,9 Gew.-% ein oder mehreren hydrophoben $C_1$-bis $C_{12}$-Alkylacrylaten oder $C_1$- bis $C_{12}$-Alkylmethacrylaten und
(C2): 0,1 bis 20 Gew.-% ein oder mehreren hydrophilen Comonomeren ausgewählt aus der Gruppe bestehend aus Acrylamid und Methacrylamid,

wobei (C1) und (C2) 100 Gew.-% ergeben;

(B2): 15 bis 60 Gew.-%, bezogen auf den Feststoffgehalt des Pfropfcopolymers (B), einer Pfropfhülle aus mindestens einem ethylenisch ungesättigtem Monomer (B20), wobei (B20) eine Mischung aus den Monomeren (B21) und (B22) umfasst,
erhalten durch Umsetzung der agglomerierten Pfropfgrundlage (B1) mit einer Mischung aus:

(B21) 70 bis 90 Gew.-%, bezogen auf die Pfropfhülle (B2), Styrol und/oder α-Methylstyrol, insbesondere Styrol, und
(B22) 10 bis 30_Gew.-%, bezogen auf die Pfropfhülle (B2), Acrylnitril und/oder Methylmethacrylat, insbesondere Acrylnitril,

wobei die Gesamtsumme aus Pfropfgrundlage (B1a) und Pfropfhülle (B2) 100 Gew.-% ergibt,

wobei das agglomerierend wirkende Copolymer (C) erhalten wird durch

i)

| | |
|---|---|
| Polymerisation von (C1): | 80 bis 99,9 Gew.-% ein oder mehreren hydrophoben $C_1$- bis $C_{12}$-Alkylacrylaten oder $C_1$- bis $C_{12}$-Alkylmethacrylaten, |

ii) Zugabe mindestens eines Emulgators (E),

iii)

| | |
|---|---|
| Zugabe und Polymerisation von (C2): | 0,1 bis 20 Gew.-% ein oder mehreren hydrophilen Comonomeren ausgewählt aus der Gruppe bestehend aus Acrylamid und Methacrylamid, wobei (C1) und (C2) 100 Gew.-% ergeben, |

wobei die Zugabe von (C2) 2 bis 100 min nach der Zugabe von (E) im Schritt ii) erfolgt.

Besonders bevorzugt wird die unter (a) erhaltene Pfropfgrundlage (B1a) durch Zugabe von 2,0 bis 3 Gew.-Teilen, bezogen auf 100 Gew.-Teile der Pfropfgrundlage (B1a), jeweils bezogen auf den Feststoffgehalt, mit mindestens einem agglomerierend wirkendem Copolymer (C) agglomeriert.

Bevorzugt endet die Zugabe des mindestens einen Emulgators (E) und (C2) gleichzeitig. Bevorzugt endet die Zugabe des mindestens einen Emulgators (E), (C2) und dem für die Polymerisation von (C2) benötigten Initiators gleichzeitig.

Die erfindungsgemäßen Pfropfcopolymere (B) können so weiter verwendet werden, wie sie in der Reaktionsmischung anfallen, beispielsweise als Latexemulsion oder Latexdispersion. Alternativ können sie aber auch in einem weiteren Schritt aufgearbeitet werden. Maßnahmen zur Aufarbeitung sind dem Fachmann im Prinzip bekannt.

Zu den Aufarbeitungsschritten zählt zum Beispiel die Isolierung der Pfropfcopolymerisate (B) aus der Reaktionsmischung, zum Beispiel durch Sprühtrocknung, Scherung oder durch Fällen mit starken Säuren oder mittels anderer Fällungsmittel, z.B. aus anorganischen Verbindungen wie Magnesiumsulfat. Zu den Aufarbeitungsschritten zählt auch das Trocknen des isolierten Kautschuks. Der Feststoffgehalt der Dispersion des Pfropfkautschuks beträgt ca. 40 Gew.-%.

Ein weiterer Gegenstand der Erfindung ist ein Verfahren zur Herstellung eines erfindungsgemäßen Pfropfpolymers durch:

(I) Polymerisieren von mindestens einem ethylenisch ungesättigtem Monomer (B10) in wässriger Emulsion zu der Pfropfgrundlage (B1a),

(II) Agglomeration der in der Emulsion vorliegenden Pfropfgrundlage (B1a) mittels mindestens eines agglomerierend wirkenden Copolymers (C), und nachfolgendes

(III) Polymerisieren von mindestens einem ethylenisch ungesättigten Monomer (B20) zu einer Pfropfhülle in wässriger Emulsion in Gegenwart der agglomerierten Pfropfgrundlage (B1).

(B), (B12), (B11), (B1), (C), (B21) und (B22) haben die für das erfindungsgemäße Pfropfcopolymer angegebene Bedeutung, insbesondere die vorstehend genannten Mengen.

Nach dem erfindungsgemäßen Verfahren weist die erhaltene teilchenförmige Pfropfgrundlage (B1a) im Allgemeinen einen dso-Wert von 80 bis 120 nm auf.

Formmassen

Ein weiterer Gegenstand der vorliegenden Erfindung ist eine thermoplastische Formmasse, enthaltend mindestens ein thermoplastisches Copolymer (A) und mindestens ein erfindungsgemäß erhaltenes Pfropfcopolymer (B) sowie gegebenenfalls eine weitere Komponente (K). Dabei enthält die Formmasse insbesondere:

(A): 40 bis 80 Gew.-% mindestens eines thermoplastischen Copolymers (A) erhältlich (oder erhalten) aus:

(A1): 20 bis 31 Gew.-%, bezogen auf das Copolymer (A), Acrylnitril, und
(A2): 69 bis 80 Gew.-%, bezogen auf das Copolymer (A), Styrol oder $\alpha$-Methylstyrol oder einer Mischung aus Styrol und $\alpha$-Methylstyrol,

(B): 20 bis 60 Gew.-% des Pfropfcopolymers (B); und
(K): 0 bis 5 Gew.-% weitere Komponenten (K),

wobei die Summe aus (A), (B) und (K) 100 Gew.-% ergibt.

Copolymer (A)

Das Copolymer (A) wird vorzugsweise aus den Komponenten Acrylnitril und Styrol und/oder $\alpha$-Methylstyrol durch Massepolymerisation oder in Gegenwart eines oder mehrerer Lösungsmittel hergestellt. Bevorzugt sind dabei Copolymere (A) mit Molmassen $M_w$ von 50.000 bis 300.000 g/mol, wobei die Molmassen z.B. durch Lichtstreuung in Tetrahydrofuran bestimmt werden können (GPC mit UV-Detektion). Das Copolymer (A) bildet die Matrix der thermoplastischen Formmasse.

Das Copolymer (A) kann insbesondere enthalten oder bestehen aus:

(Aa) Polystyrol-Acrylnitril, hergestellt aus, bezogen auf (Aa), 69 bis 80 Gew.-% Styrol und 20 bis 31 Gew.-% Acrylnitril,

oder

(Ab) Poly-$\alpha$-Methylstyrol-Acrylnitril, hergestellt aus, bezogen auf (Ab), 69 bis 80 Gew.-% $\alpha$-Methylstyrol und 20 bis 31 Gew.-% Acrylnitril, oder

(Ac) eine Mischung der Copolymer-Matrix (Aa) und der Copolymer-Matrix (Ab).

Das Copolymer (A) kann auch durch Copolymerisation von Acrylnitril, Styrol und $\alpha$-Methylstyrol gewonnen werden. Im Prinzip sind jedoch auch Polymer-Matrices verwendbar, die weitere Monomerbausteine enthalten. Vorzugsweise ist das Copolymer (A) aus den Monomeren Styrol und Acrylnitril aufgebaut.

Das zahlengemittelte Molekulargewicht ($M_n$) von Copolxmer A, auch Copolymer-Matrix A, beträgt vorzugsweise von 15.000 bis 100.000 g/mol (bestimmt mittels GPC mit UV-Detektion). Die Viskosität (Vz) der copolymeren Matrix A beträgt (gemessen nach DIN 53726 bei 25°C in einer 0,5 gew.-%igen Lösung in DMF) z.B. von 50 bis 120 ml/g. Durch Massepolymerisation bzw. Lösungspolymerisation in z.B. Toluol oder Ethylbenzol kann die Copolymer-Matrix A hergestellt werden nach einem Verfahren, wie es beispielsweise im Kunststoff-Handbuch, Vieweg-Daumiller, Band V, (Polystyrol), Carl-Hanser-Verlag, München 1969, Seiten 122 f., Zeilen 12 ff. beschrieben wird.

Wie bereits oben beschrieben ist die bevorzugte Copolymer-Matrix Komponente A ein Polystyrol-Acrylnitril, Poly-$\alpha$-Methylstyrol-Acrylnitril oder deren Mischungen. In einer bevorzugten Ausführungsform der Erfindung wird die Komponente A nach der Herstellung nach dem Fachmann bekannten Verfahren isoliert und vorzugsweise zu einem Granulat verarbeitet.

In einer Ausführungsform der Erfindung enthält die thermoplastische Formmasse zusätzlich mindestens ein weiteres thermoplastisches Polymer (TP), ausgewählt aus der Gruppe der Polycarbonate, Polyestercarbonate, Polyester und Polyamide.

Die in der Formmasse erfindungsgemäß eingesetzten Copolymere A können auch z.B. mit weiteren thermoplastischen Polymeren (TP) gemischt werden. Dabei kommen insbesondere teilkristalline Polyamide, teilaromatische Copolyamide, Polyester, Polyoxyalkylen, Polyarylensulfide, Polyetherketone, Polyvinylchloride und/oder Polycarbonate in Frage.

Die geeigneten Polycarbonate bzw. Polyestercarbonate können linear oder verzweigt sein. Verzweigte Produkte werden vorzugsweise durch den Einbau von 0,05 bis 2,0 Mol-%, bezogen auf die Summe der eingesetzten Diphenole, an drei - oder mehr als dreifunktionellen Verbindungen, z.B. solchen mit drei oder mehr als drei phenolischen OH-Gruppen, erhalten. Die Polycarbonate bzw. Polyestercarbonate können aromatisch gebundenes Halogen, vorzugsweise Brom und/oder Chlor enthalten. Vorzugsweise sind sie jedoch halogenfrei. Sie haben mittlere Molekulargewichte ($M_w$, Gewichtsmittel; bestimmt z.B. durch Ultrazentrifugation oder Streulichtmessung) von 10000 bis 200000, vorzugsweise von 20000 bis 80000.

Geeignete thermoplastische Polyester sind vorzugsweise Polyalkylenterephthalate, d.h. Reaktionsprodukte aus aromatischen Dicarbonsäuren oder ihren reaktionsfähigen Derivaten (z.B. Dimethylestern oder Anhydriden) und aliphatischen, cycloaliphatischen oder arylaliphatischen Diolen und Mischungen solcher Reaktionsprodukte. Bevorzugte Polyalkylenterephthalate lassen sich aus Terephthalsäuren (oder ihren reaktionsfähigen Derivaten) und aliphatischen oder cycloaliphatischen Diolen mit 2 bis 10 C-Atomen nach bekannten Methoden herstellen (siehe Kunststoff-Handbuch, Band VIII. S. 695 ff, Carl Hanser Verlag, München 1973).

Geeignete Polyamide sind bekannte Homopolyamide, Copolyamide und Mischungen dieser Polyamide. Es können teilkristalline und/oder amorphe Polyamide sein. Als teilkristalline Polyamide sind Polyamid-6, Polyamid-6,6, Mischungen und entsprechende Copolymerisate aus diesen Komponenten geeignet. Weiterhin kommen teilkristalline Polyamide in Betracht, deren Säurekomponente ganz oder teilweise aus Terephthalsäure und/oder Isophthalsäure und/oder Korksäure und/oder Sebacinsäure und/oder Azelainsäure und/oder Adipinsäure und/oder Cyclohexandicarbonsäure, deren Diaminkomponente ganz oder teilweise aus m- und/oder p-Xylylendiamin und/oder Hexamethylendiamin und/oder 2,2,4-Trimethylhexamethylendiamin und/oder 2,2.4-Trimethylhexamethylendiamin und/oder Isophorondiamin besteht und deren Zusammensetzung bekannt ist. Außerdem sind Polyamide zu nennen, die ganz oder teilweise aus Lactamen mit 7-12 C-Atomen im Ring, gegebenenfalls unter Mitverwendung einer oder mehrerer der oben genannten Ausgangskomponenten, hergestellt werden.

Als amorphe Polyamide können bekannte Produkte eingesetzt werden, die erhalten werden durch Polykondensation von Diaminen wie Ethylendiamin, Hexamethylendiamin, Decamethylendiamin, 2,2,4- und/oder 2,4,4-Trimethylhexamethylendiamin, mund/oder p-Xylylendiamin, Bis-(4-aminocyclohexyl)-methan, Bis-(4-aminocyclohexyl)-propan, 3,3'-Di-methyl-4,4'-diaminodicyclohexylmethan, 3-Aminomethyl,3,5,5-trimethylcyclohexylamin, 2,5- und/oder 2,6-Bis-(aminomethyl)-norbornan und/oder 1,4-Diaminomethylcyclohexan mit Dicarbonsäuren wie Oxalsäure, Adipinsäure, Azelainsäure, Decandicarbonsäure, Heptadecandicarbonsäure, 2,2,4- und/oder 2,4,4-Trimethyladipinsäure, Isophthalsäure und Terephthalsäure.

Es können auch Mischungen aus zwei oder mehreren der genannten Polymere (TP) eingesetzt werden. Die erfindungsgemäßen thermoplastischen Formmassen können, bezogen auf die Menge Copolymer A plus Pfropfcopolymer B, 0 bis 90 Gew.-%, bevorzugt 0 bis 50 Gew.-%, insbesondere bevorzugt 0 bis 20 Gew.-% der oben genannten Polymere (TP) enthalten.

Bevorzugt ist eine erfindungsgemäße thermoplastische Formmasse bestehend aus Copolymer A und Pfropfcopolymer B sowie gegebenenfalls weiteren Komponenten K.

Als weitere Komponenten (K) kann die thermoplastische Formmasse eine oder mehrere Komponenten ausgewählt aus der Gruppe bestehend aus Dispergiermitteln (DM), Füllstoffen (F) und Zusatzstoffen (D) enthalten.

Als Komponente (K) können die erfindungsgemäßen thermoplastischen Formmassen ferner auch 0 bis 5 Gew.-%, oftmals 0,1 bis 5 Gew.-% an faser- oder teilchenförmigen Füllstoffen (F) oder deren Mischungen enthalten, jeweils bezogen auf die Menge der Komponenten A plus B plus K. Beispielsweise können als Füll- oder Verstärkungsstoffe Glasfasern, die mit einer Schlichte und einem Haftvermittler ausgerüstet sein können, Glaskugeln, Mineralfasern, Aluminiumoxidfasern, Glimmer, Quarzmehl oder Wollastonit zugesetzt werden. Außerdem können Metallflocken, Metallpulver, Metallfasern, metallbeschichtete Füllstoffe, z.B. nickelbeschichtete Glasfasern sowie andere Zuschlagstoffe, die elektromagnetische Wellen abschirmen, den erfindungsgemäßen Formmassen beigemischt werden. Zusätzlich können Kohlenstofffasern, Ruß, insbesondere Leitfähigkeitsruß oder nickelbeschichtete C-Fasern zugesetzt werden.

Den erfindungsgemäßen Formmassen können als Hilfs- und Verarbeitungszusatzstoffe verschiedene Additive (D) in Mengen von 0 bis 5 Gew.-%, oftmals 0,1 bis 5 Gew.-% zugesetzt werden.

Als Zusatzstoffe (D) kommen alle solche Substanzen in Betracht, die üblicherweise zur Verarbeitung oder Ausrüstung der Polymere zum Einsatz kommen.

Genannt seien beispielsweise Farbstoffe, Pigmente, Färbemittel, Antistatika, Antioxidantien, Stabilisatoren zur Verbesserung der Thermostabilität, Stabilisatoren zur Erhöhung der Lichtstabilität, Stabilisatoren zum Anheben der Hydrolysebeständigkeit und der Chemikalienbeständigkeit, Mittel gegen die Wärmezersetzung und insbesondere Schmier-/Gleitmittel, die für die Herstellung von Formkörpern bzw. Formteilen zweckmäßig sind. Das Ein-Dosieren dieser weiteren Zusatzstoffe kann in jedem Stadium des Herstellungsprozesses erfolgen, vorzugsweise jedoch zu einem frühen Zeitpunkt, um frühzeitig die Stabilisierungseffekte (oder anderen speziellen Effekte) des Zusatzstoffes auszunutzen. Hinsichtlich weiterer üblicher Hilfs- und Zusatzstoffe wird z.B. auf "Plastics Additives Handbook", Ed. Gächter and Müller, 4th edition, Hanser Publ., Munich, 1996, verwiesen.

Geeignete Pigmente sind beispielsweise Titandioxid, Phthalocyanine, Ultramarinblau, Eisenoxide oder Ruß, sowie die gesamte Klasse der organischen Pigmente.

Geeignete Färbemittel sind z.B. alle Farbstoffe, die zur transparenten, halbtransparenten oder nichttransparenten Einfärbung von Polymeren verwendet werden können, insbesondere solche, die zur Einfärbung von Styrolcopolymeren geeignet sind.

Als geeignete Flammschutzmittel können z. B. die dem Fachmann bekannten halogenhaltigen oder phosphorhaltigen Verbindungen, Magnesiumhydroxid, sowie andere gebräuchliche Verbindungen, oder deren Mischungen verwendet werden.

Geeignete Antioxidantien sind z. B. sterisch gehinderte einkernige oder mehrkernige phenolische Antioxidantien, die auf verschiedene Weise substituiert und auch über Substituenten verbrückt sein können. Hierzu zählen neben monomeren auch oligomere Verbindungen, die aus mehreren phenolischen Grundkörpern aufgebaut sein können. Ferner kommen Hydrochinone und Hydrochinon-analoge, substituierte Verbindungen in Betracht, ebenso Antioxidantien auf Basis von Tocopherolen und deren Derivaten. Auch Mischungen verschiedener Antioxidantien können verwendet werden.

Prinzipiell können alle handelsüblichen oder für Styrolcopolymere geeigneten Verbindungen eingesetzt werden, z.B. Antioxidantien aus der Irganox-Reihe. Zusammen mit den zuvor beispielhaft genannten phenolischen Antioxidantien können sogenannte Co-Stabilisatoren mitverwendet werden, insbesondere Phosphor- oder Schwefelhaltige Co-Stabilisatoren. Solche P- oder S-haltigen Co-Stabilisatoren sind dem Fachmann bekannt.

Geeignete Stabilisatoren gegen Lichteinwirkung sind z.B. verschiedene substituierte Resorcine, Salicylate, Benzotriazole und Benzophenone. Als Mattierungsmittel kommen sowohl anorganische Stoffe wie Talkum, Glaskugeln oder Metallcarbonate (wie z.B. $MgCO_3$, $CaCO_3$) in Betracht, als auch Polymerpartikel - insbesondere sphärische Partikel mit Durchmessern $d_{50}$ über 1 mm - auf Basis von z.B. Methylmethacrylat, Styrolverbindungen, Acrylnitril oder deren Mischungen. Ferner kann man auch Polymere verwenden, die saure und/oder basische Monomere einpolymerisiert enthalten.

Geeignete Anti-Tropfmittel sind beispielsweise Polytetrafluorethylen (Teflon)-Polymere und ultrahochmolekulares Polystyrol (Molmasse $M_w$ über 2000000).

Als Beispiele für faserförmige bzw. pulverförmige Füllstoffe seien Kohlenstoff- oder Glasfasern in Form von Glasgeweben, Glasmatten oder Glasseidenrovings, Schnittglas, Glaskugeln sowie Wollastonit genannt, besonders bevorzugt Glasfasern. Bei der Verwendung von Glasfasern können diese zur besseren Verträglichkeit mit den Blendkomponenten mit einer Schlichte und einem Haftvermittler ausgerüstet sein. Die Einarbeitung der Glasfasern kann sowohl in Form von Kurzglasfasern als auch in Form von Endlossträngen (Rovings) erfolgen.

Als teilchenförmige Füllstoffe eignen sich z.B. Ruß, amorphe Kieselsäure, Magnesiumcarbonat, gepulverter Quarz, Glimmer, Mica, Bentonite, Talkum, Feldspat oder insbesondere Calciumsilikate wie Wollastonit und Kaolin.

Geeignete Antistatika sind beispielsweise Aminderivate wie N,N-Bis(hydroxyalkyl)alkylamine oder -alkylenamine, Polyethylenglycolester, Copolymere aus Ethylenoxidglycol und Propylenoxidglycol (insbesondere Zweiblock- oder Dreiblockcopolymere aus Ethylenoxid- und Propylenoxid-Blöcken) und Glycerinmono- und - distearate, sowie deren Mischungen.

Geeignete Stabilisatoren sind beispielsweise gehinderte Phenole, aber auch Vitamin E bzw. analog dazu aufgebaute Verbindungen, wie auch butylierte Kondensationsprodukte von p-Kresol und Dicyclopentadien. Auch HALS-Stabilisatoren (Hindered Amine Light Stabilizers), Benzophenone, Resorcine, Salicylate, Benzotriazole sind geeignet. Andere geeignete Verbindungen sind zum Beispiel Thiocarbonsäureester.

Einsetzbar sind auch $C_6$-$C_{20}$-Alkylester der Thiopropionsäure, besonders die Stearylester und Laurylester. Man kann auch Thiodipropionsäuredilaurylester (Dilaurylthiodipropionat), Thio-dipropionsäuredisterarylester (Distearylthiodipropionat) oder deren Mischungen verwenden. Weitere Additive sind beispielsweise HALS-Absorber, wie Bis(2,2,6,6-tetramethyl-4-piperidyl)sebazat oder UV-Absorber wie 2H-Benzotriazol-2-yl-(4-methylphenol). Derartige Additive werden üblicherweise in Mengen von 0,01 bis zu 2 Gew.-% (bezogen auf das Gesamtgemisch) verwendet.

Geeignete Gleit- und Entformungsmittel sind Stearinsäuren, Stearylalkohol, Stearinsäureester, Amidwachse (Bisstearylamid),Polyolefinwachse bzw. allgemein höhere Fettsäuren, deren Derivate und entsprechende Fettsäuregemische mit 12 bis 30 Kohlenstoffatomen. Auch Ethylen-bis-stearamid (z. B. Irgawax, Hersteller Ciba, Schweiz) ist besonders geeignet. Die Mengen dieser Zusätze liegen im Bereich von 0,05 bis 5 Gew.-%.

Auch Silikonöle, oligomeres Isobutylen oder ähnliche Stoffe kommen als Zusatzstoffe in Betracht. Die üblichen Mengen, falls verwendet, betragen von 0,001 bis 3 Gew.-% bezogen auf die Menge der Komponenten A plus B plus K. Auch Pigmente, Farbstoffe, Farbaufheller, wie Ultramarinblau, Phthalocyanine, Titandioxid, Cadmiumsulfide, Derivate der Perylentetracarbonsäure sind verwendbar. Verarbeitungshilfsmittel und Stabilisatoren wie UV-Stabilisatoren, Wärmestabilisatoren (z.B. butylierte Reaktionsprodukte von p-Cresol und Dicyclopentadien, wie z.B. Wingstay L; Hersteller: Omnova; oder aber Thiodipropionsäuredilaurylester, Irganox PS 800, Hersteller: BASF), Schmiermittel und Antistatika (z.B. Ethylenoxid-Propylenoxid-Copolymere wie Pluronic (Hersteller: BASF) werden, falls eingesetzt, üblicherweise in Mengen von 0,01 bis 5 Gew.-% verwendet, bezogen auf die Menge der Komponenten A plus B plus K.

Die einzelnen Zusatzstoffe werden in der Regel in den jeweils üblichen Mengen verwendet.

Die Herstellung der erfindungsgemäßen Formmassen aus den Komponenten A und B (und gegebenenfalls weiteren Polymeren (TP) und Komponenten K) kann nach allen bekannten Methoden erfolgen. Vorzugsweise erfolgt jedoch das Abmischen der Komponenten durch Schmelzevermischung, beispielsweise gemeinsames Extrudieren, Kneten oder Verwalzen der Komponenten. Dies wird bei Temperaturen im Bereich von 160 bis 400°C, bevorzugt von 180 bis 280°C durchgeführt. In einer bevorzugten Ausführungsform wird die Komponente (B) zuvor aus der bei den jeweiligen Herstellungsschritten erhaltenen wässrigen Dispersion teilweise oder vollständig isoliert. Beispielsweise können die Pfropfcopolymere B als feuchte oder trockene Krümel/Pulver (beispielsweise mit einer Restfeuchte von 1 bis 40 %, insbesondere 20 bis 40 %) mit den Matrix-Polymeren vermischt werden, wobei dann während des Vermischens die vollständige Trocknung der Pfropfcopolymere erfolgt. Die Trocknung der Partikel kann auch gemäß DE-A 19907136 erfolgen.

Verwendung der Pfropfcopolymere

Ein weiterer Gegenstand der Erfindung ist die Verwendung der erfindungsgemäßen thermoplastischen Formmasse zur Herstellung von Formteilen, wie Platten oder Halbzeugen, Folien, Fasern oder auch von Schäumen sowie die entsprechenden Formteile wie Platten, Halbzeuge, Folien, Fasern oder Schäume.

Die Verarbeitung kann mittels der bekannten Verfahren der Thermoplastverarbeitung durchgeführt werden, insbesondere kann die Herstellung durch Thermoformen, Extrudieren, Spritzgießen, Kalandrieren, Hohlkörperblasen, Pressen, Presssintern, Tiefziehen oder Sintern, vorzugsweise durch Spritzgießen erfolgen.

Die erfindungsgemäßen Formmassen weisen hervorragende mechanische Eigenschaften wie Zähigkeit und Steifigkeit auf. Des Weiteren wurde für die erfindungsgemäßen Formmassen ein verbesserter Oberflächenglanz gefunden.

Vorzugsweise umfasst der Ausdruck "umfassend" auch den Ausdruck "bestehend aus".

Alle vorstehend aufgeführten Ausführungsformen und bevorzugten Ausführungsformen sind frei miteinander kombinierbar, sofern der Kontext nicht eindeutig dagegen spricht.

Weitere vorteilhafte Ausgestaltungen werden durch die Figuren veranschaulicht und in der nachfolgenden Beschreibung erläutert. Es zeigen:

FIG. 1 bis FIG. 4:    Größenverteilung der Propfcopolymere (B) und
FIG. 5:                Charpy-Kerbschlagzähigkeit der End-Formmasse.

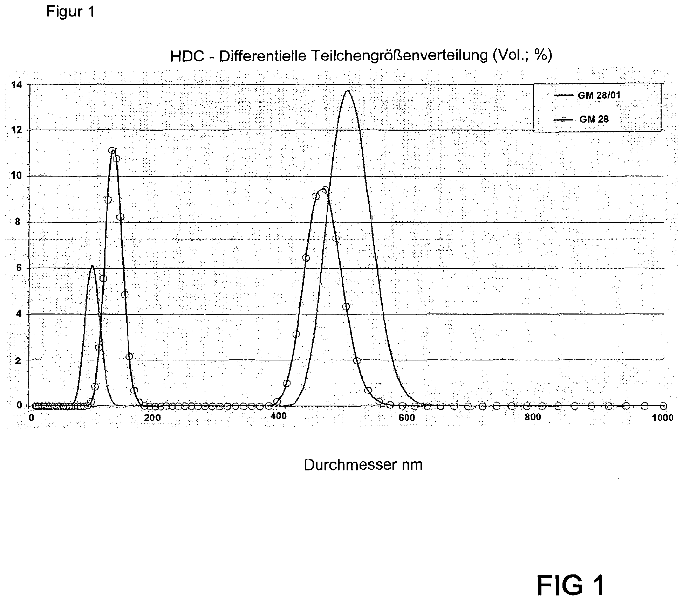

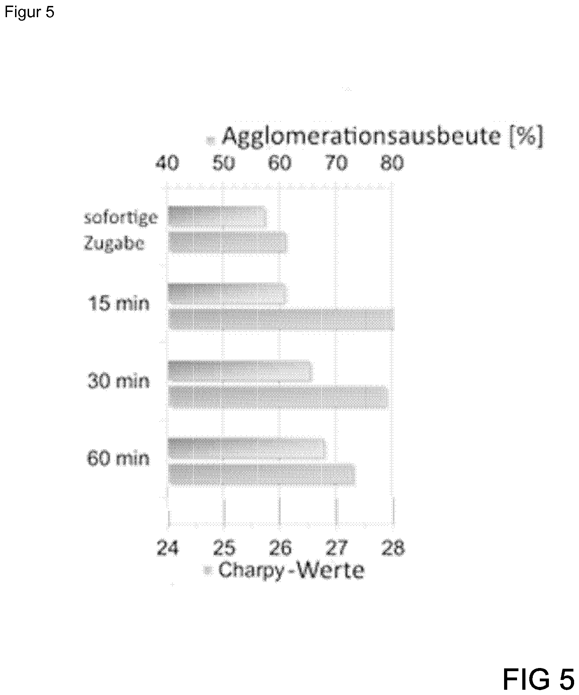

Die in den Figuren 1 bis 4 dargestellten Größenverteilungen spiegeln die entsprechenden Proben nach der Agglomeration und nach Beendigung der Propfung wider, welche in den Beispielen beschrieben werden. In der Figur 5 wird die Charpy-Kerbschlagzähigkeit und die Agglomerationsausbeute der Endformmasse illustriert.

Der obere Balken entspricht der Agglomerationsausbeute. Der untere Balken entspricht der Charpy-Kerbschlagzähigkeit.

Die Erfindung soll durch die weiteren Beispiele und Ansprüche illustriert werden. Zunächst werden die zur Charakterisierung der Polymere eingesetzten Untersuchungsmethoden kurz zusammengefasst:

a) Charpy-Kerbschlagzähigkeit [kJ/m$^2$]:
Die Kerbschlagzähigkeit wird ermittelt an Probekörpern (80 x 10 x 4 mm, hergestellt durch Spritzguss bei einer Massetemperatur von 240°C und einer Werkzeugtemperatur von 70°C), bei 23°C nach ISO 179-1A.

b) Fließfähigkeit (MVR [ml/10 min]):
Die Fließfähigkeit wird ermittelt an einer Polymerschmelze bei 220°C und 10 kg Belastung nach ISO 1133.

c) Teilchengröße [nm]:

Zur Messung der gewichtsmittleren Teilchengröße $d_w$ der Kautschukdispersionen der Pfropfgrundlage B1 und der agglomerierten Pfropfgrundlage B1 wurde eine Scheibenzentrifuge DC 24000 von CPS Instruments Inc. verwendet. Die Messung erfolgte in 17,1 ml einer wässrigen Zuckerlösung mit einem Saccharose-Dichtegradienten von 8 bis 20 Gew.-%, um ein stabiles Flotationsverhalten der Partikel zu erreichen. Ein Polybutadienlatex mit einer engen Verteilung und einer mittleren Teilchengröße von 405 nm wurde für die Kalibrierung verwendet. Die Messungen wurden bei einer Drehzahl der Scheibe von 24000 UpM durch Einspritzen von 0,1 ml einer verdünnten Kautschukdispersion (wässrige 24 Gew.-% Saccharose-Lösung, enthaltend ca. 0,2 - 2 Gew.-% Kautschukteilchen) in die Scheibenzentrifuge, enthaltend die wässrige Zuckerlösung mit einem Saccharose Dichtegradienten von 8 bis 20 Gew.-%, durchgeführt.

Zur Messung der gewichtsmittleren Teilchengröße $d_w$ des agglomerierend wirkenden Copolymers (C) mit der Scheibenzentrifuge DC 24000 von CPS Instruments Inc. wurden 17,1 ml einer wässrigen Zuckerlösung mit einem Saccharose-Dichtegradienten von 3,5 bis 15,5 Gew.-% verwendet, um ein stabiles Sedimentationsverhalten der Teilchen zu erreichen. Ein Polyurethan-Latex (Teilchendichte 1,098 g / ml) mit einer engen Verteilung und einer mittleren Teilchengröße von 155 nm wurde für die Kalibrierung verwendet. Die Messungen wurden bei einer Drehzahl der Scheibe von 24000 UpM durchgeführt durch Einspritzen von 0,1 ml einer verdünnten Dispersion des Copolymers C (hergestellt durch Verdünnen mit Wasser bis zu einem Gehalt von 1- 2 Gew.%) in die Scheibenzentrifuge, enthaltend die wässrige Zuckerlösung mit einem Saccharose Dichtegradienten von 3,5 bis 15,5 Gew.%, durchgeführt.

Die Feststoffgehalte wurden nach Trocknung der Proben bei 180 °C für 25 min in einem Trockenschrank gemessen.

d) Quellungsindex QI und Gelgehalt [%]:

Die Werte für den Gelgehalt wurden mit dem Drahtkäfigverfahren in Toluol (siehe Houben-Weyl, Methoden der Organischen Chemie, Makromolekulare Stoffe, Teil 1, Seite 307 (1961) Thieme Verlag Stuttgart) ermittelt. Aus der wässrigen Dispersion der Pfropfgrundlage wurde durch Verdampfen des Wassers ein Film hergestellt. 0,2 g dieses Films wurden mit 50 g Toluol versetzt. Nach 24 Stunden wurde das Toluol von der aufgequollenen Probe abgetrennt und die Probe ausgewogen. Nach 16 Stunden Trocknen der Probe im Vakuum bei 110 °C wurde erneut ausgewogen.

Der Quellungsindex wird bestimmt durch:

$$\text{Quellungsindex QI} = \frac{\text{Gequollenes Gel mit Toluol vor dem Trocknen}}{\text{Gel nach dem Trocknen}}$$

Der Gelgehalt wird bestimmt durch:

$$\text{Gelgehalt} = \frac{\text{Masse der im Vakuum getrockneten Probe}}{\text{Einwaage der Probe vor der Quellung}} \times 100\%$$

e) Glanzverhalten

Zur Bestimmung des Glanzverhaltens werden mittels einer Spritzgussmaschine bei einer Massetemperatur von 240°C und einer Werkzeugtemperatur von 70°C rechteckige Plättchen mit den Abmessungen 60 mm x 40 mm x 2 mm aus der Polymerschmelze hergestellt. Der Oberflächenglanz wird durch Reflektionsmessung nach DIN 67530 bei einem Winkel von 20° gemessen.

f) Yellowness Index YI

Die Bestimmung des YI-Wertes erfolgte an Plättchen mit den Abmessungen 60 x 40 x 2 mm, hergestellt durch Spritzguss bei einer Massetemperatur von 240°C und einer Werkzeugtemperatur von 70°C nach ASTM-Methode E313-96 (Lichtart / Beobachter-Kombination C / 2 °).

Die Erfindung wird durch die Beispiele und Ansprüche näher erläutert.

Beispiel 1

1) Herstellung der Pfropfgrundlage (B1a)

Die Herstellung der Pfropfgrundlage (B1a), wie PB904, erfolgt durch Emulsionspolymerisation von Butadien und Styrol nach dem Zulaufverfahren. Als Comonomer werden 7 Gew.-% Styrol verwendet.

Die Emulsionspolymerisation wird in einem 150 L- Reaktor bei einer Temperatur von 67 °C durchgeführt. 43120 g der Monomermischung (Butadien und Styrol) werden bei 67 °C in Anwesenheit von 431,2 g tert.-Dodecylmercaptan (TDM), 311 g Kaliumstearat, 82 g Kaliumpersulfat, 147 g Natriumhydrogencarbonat und 58400 g Wasser polymerisiert, wobei ein Latex der Pfropfgrundlage mit einem Feststoffgehalt von 41.5 Gew.-% erhalten wird. Die Monomere werden in der im Folgenden aufgeführten Reihenfolge in den Reaktor gegeben:

Zunächst erfolgt die Zugabe von Styrol in einer Menge von 7 Gew.-%, bezogen auf die gesamte Monomermenge, innerhalb von 20 Minuten. Im Anschluss an die Styrolzugabe erfolgt die Zugabe eines ersten Teils des Butadiens in einer Menge von 7 Gew.-%, bezogen auf die gesamte Monomermenge, innerhalb von 25 Minuten. Der restliche Teil des Butadiens, der 86 Gew.-%, bezogen auf die gesamte Monomermenge, entspricht, wird anschließend innerhalb von 8,5 Stunden zugegeben. TDM wird zu Beginn der Reaktion auf einmal zugegeben. Der Umsatz der Polymerisation beträgt ≥ 95 %.

Weitere Daten der Pfropfgrundlage (B1a) sind in Tabelle 1 beschrieben:

Tabelle 1

| Pfropfgrundlage | | B1a |
|---|---|---|
| Gesamtstyrolgehalt | Gew.-% | 7 |
| Kernstyrolgehalt | Gew.-% | 7 |
| Gelgehalt | Gew.-% | 76,6 |
| QI | | 22 |
| $d_w$ | nm | 100,1 |
| $d_{10}$ | nm | 78,7 |
| $d_{50}$ | nm | 94,2 |
| $d_{90}$ | nm | 103,8 |
| U | | 0,27 |

2) Herstellung des agglomerierend wirkenden Copolymers (C) (erfindungsgemäß)

Die Herstellung des Copolymers C, wie Agglonal 574, erfolgt mittels Emulsionspolymerisation.

Beispiel 2

In der Tabelle 2 sind die Komponenten und Mengen der jeweiligen Zuläufe illustriert:

Tabelle 2

|  |  | Menge [g] | Einsatzstoff | Gehalt % | pphm | mol | Volumen [l] | Gewichtsprozente |
|---|---|---|---|---|---|---|---|---|
| Vorlage | 1 | 504,70 | VE-Wasser | 100,00 | 71,65 | 28,008 | 504,7 | 28,52 |
|  | 2 | 0,66 | Emulgator K 30 | 40,00 | 0,04 | 0,001 | 0,66 | 0,04 |
| Zulauf 1 | 1 | 1,53 | Natriumperoxodisulfat | 100,00 | 0,22 | 0,006 | 1,53 | 0,09 |
|  | 2 | 21,86 | VE-Wasser | 100,00 | 3,10 | 1,213 | 21,86 | 1,235202712 |
| Zulauf 2 | 1 | 75,20 | Ethylacrylat | 100,00 | 10,68 | 0,751 | 75,2 | 4,25 |
| Zulauf 3 | 1 | 597,20 | Ethylacrylat | 100,00 | 84,78 | 5,965 | 597,2 | 33,74 |
| Zulauf 4 | 1 | 213,60 | Methacrylamid | 15,00 | 4,55 | 0,376 | 213,6 | 12,07 |
|  | 2 | 24,70 | Emulgator K30 | 40,00 | 1,40 | 0,033 | 24,7 | 1.395677356 |
|  | 3 | 129,10 | VE-Wasser | 100,00 | 18,33 | 7,164 | 129,1 | 7,294815652 |
| Zulauf 5 | 1 | 1,20 | Natriumperoxodisulfat | 100,00 | 0,17 | 0,005 | 1,2 | 0,07 |
|  | 2 | 200,00 | VE-Wasser | 100,00 | 28,39 | 11,099 | 200 | 11,30103122 |

Die Ergebnisse werden in der Tabelle 3 gezeigt.

Tabelle 3

|  |  |  | Bedingungen | Messwert | Einheit |
|---|---|---|---|---|---|
| Endprobe | 1 | Teilchengröße | HDC, d(0,1) | 114 | nm |
|  | 2 | Teilchengröße | HDC, d(0,5) | 128 | nm |
|  | 3 | Teilchengröße | HDC, d(0,9) | 145 | nm |
|  | 4 | Feststoffgehalt | Automat Mettler, 10 h, 200 | 40,1 | % |

Apparatur: 2l Vierhalskolben mit Metallrührer, Rückflußkühler, N2-Innertisierung, Temperaturregelung über Wasserbad mit Tauchsieder, Rührer; 180 Upm

Fahrweise:

Vorlage wird innertisiert und auf 70°C aufgeheizt. Bei Erreichen der Temperatur wird Zulauf 1 in 10 min zudosiert, 5 min rühren. Zulauf 2 wird gestartet und in 18 min zudosiert, die Temperatur wird von 70 auf 80°C gebracht. Während des Zulaufs das Anspringen des Versuches beobachten. Nach Zulaufende von Zulauf 2 werden die Zuläufe 3 und 5 gestartet und in 3 Stunden zudosiert sowie die Seife von Zulauf 4. Methacrylamid wird erst nach 15 min zudosiert.
Nach Zulaufende wird noch 45 min bei 80°C nachpolymerisiert. Ansatz wird auf Raumtemperatur gebracht, filtriert und abgefüllt.

Beispiel 3

In der Tabelle 4 sind die Komponenten und Mengen der jeweiligen Zuläufe illustriert.

Tabelle 4

|  |  | Menge [g] | Einsatzstoff | Gehalt % | pphm | mol | Volumen [l] | Gewichtsprozente |
|---|---|---|---|---|---|---|---|---|
| Vorlage | 1 | 504,70 | VE-Wasser | 100,00 | 71,65 | 28,008 | 504,7 | 28,51 |
|  | 2 | 1,32 | Emulgator K 30 | 40,00 | 0,07 | 0,002 | 1,32 | 0,07 |

(fortgesetzt)

|  |  | Menge [g] | Einsatzstoff | Gehalt % | pphm | mol | Volumen [l] | Gewichtsprozente |
|---|---|---|---|---|---|---|---|---|
| Zulauf 1 | 1 | 1,53 | Natriumperoxodisulfat | 100,00 | 0,22 | 0,006 | 1,53 | 0,09 |
|  | 2 | 21,86 | VE-Wasser | 100,00 | 3,10 | 1,213 | 21,86 | 1,234742235 |
| Zulauf 2 | 1 | 75,20 | Ethylacrylat | 100,00 | 10,68 | 0,751 | 75,2 | 4,25 |
| Zulauf 3 | 1 | 597,20 | Ethylacrylat | 100,00 | 84,78 | 5,965 | 597,2 | 33,73 |
| Zulauf 4 | 1 | 213,60 | Methacrylamid | 15,00 | 4,55 | 0,376 | 213,6 | 12,07 |
|  | 2 | 24,70 | Emulgator K30 | 40,00 | 1,40 | 0,033 | 24,7 | 1.395157054 |
|  | 3 | 129,10 | VE-Wasser | 100,00 | 18,33 | 7,164 | 129,1 | 7,292096181 |
| Zulauf 5 | 1 | 1,20 | Natriumperoxodisulfat | 100,00 | 0,17 | 0,005 | 1,2 | 0,07 |
|  | 2 | 200,00 | VE-Wasser | 100,00 | 28,39 | 11,099 | 200 | 11,29681825 |

Ergebnisse:

Tabelle 5

|  |  |  | Bedingungen | Messwert | Einheit |
|---|---|---|---|---|---|
| Endprobe | 1 | Teilchengröße | HDC, d(0,1) | 92 | nm |
|  | 2 | Teilchengröße | HDC, d(0,5) | 105 | nm |
|  | 3 | Teilchengröße | HDC, d(0,9) | 120 | nm |
|  | 4 | Feststoffgehalt | Automat Mettler, 10 h, 200 | 40,3 | % |

Apparatur: 2l Vierhalskolben mit Metallrührer, Rückflusskühler, N2-Innertisierung, Temperaturregelung über Wasserbad mit Tauchsieder, Rührer; 180Upm

Fahrweise:
Vorlage wird innertisiert und auf 70°C aufgeheizt. Bei Erreichen der Temperatur wird Zulauf 1 in 10 min zudosiert, 5 min rühren. Zulauf 2 wird gestartet und in 18 min zudosiert, die Temperatur wird von 70 auf 80°C gebracht. Während des Zulaufs das Anspringen des Versuches beobachten. Nach Zulaufende von Zulauf 2 werden die Zuläufe 3/4 und 5 gestartet und in 3 Stunden zudosiert.
Nach Zulaufende wird noch 45 min bei 80°C nachpolymerisiert. Ansatz wird auf Raumtemperatur gebracht, filtriert und abgefüllt.

Beispiel 4

In der Tabelle 6 sind die Komponenten und Mengen der jeweiligen Zuläufe illustriert.

Tabelle 6

|  |  | Menge [g] | Einsatzstoff | Gehalt % | pphm | mol | Volumen [l] | Gewichtsprozente |
|---|---|---|---|---|---|---|---|---|
| Vorlage | 1 | 504,70 | VE-Wasser | 100,00 | 71,65 | 28,008 | 504,7 | 28,52 |
|  | 2 | 0,66 | Emulgator K 30 | 40,00 | 0,04 | 0,001 | 0,66 | 0,04 |
| Zulauf 1 | 1 | 1,53 | Natriumperoxodisulfat | 100,00 | 0,22 | 0,006 | 1,53 | 0,09 |
|  | 2 | 21,86 | VE-Wasser | 100,00 | 3,10 | 1,213 | 21,86 | 1,235202712 |
| Zulauf 2 | 1 | 75,20 | Ethylacrylat | 100,00 | 10,68 | 0,751 | 75,2 | 4,25 |
| Zulauf 3 | 1 | 597,20 | Ethylacrylat | 100,00 | 84,78 | 5,965 | 597,2 | 33,74 |

(fortgesetzt)

|  |  | Menge [g] | Einsatzstoff | Gehalt % | pphm | mol | Volumen [l] | Gewichtsprozente |
|---|---|---|---|---|---|---|---|---|
| Zulauf 4 | 1 | 213,60 | Methacrylamid | 15,00 | 4,55 | 0,376 | 213,6 | 12,07 |
|  | 2 | 24,70 | Emulgator K30 | 40,00 | 1,40 | 0,033 | 24,7 | 1.395677356 |
|  | 3 | 129,10 | VE-Wasser | 100,00 | 18,33 | 7,164 | 129,1 | 7,294815652 |
| Zulauf 5 | 1 | 1,20 | Natriumperoxodisulfat | 100,00 | 0,17 | 0,005 | 1,2 | 0,07 |
|  | 2 | 200,00 | VE-Wasser | 100,00 | 28,39 | 11,099 | 200 | 11,30103122 |

Ergebnisse:

Tabelle 7

|  |  |  | Bedingungen | Messwert | Einheit |
|---|---|---|---|---|---|
| Endprobe | 1 | Teilchengröße | HDC, d(0,1) | 108 | nm |
|  | 2 | Teilchengröße | HDC, d(0,5) | 122 | nm |
|  | 3 | Teilchengröße | HDC, d(0,9) | 138 | nm |
|  | 4 | Feststoffgehalt | Automat Mettler, 10 h, 200 | 40 | % |

Apparatur: 2l Vierhalskolben mit Metallrührer, Rückflusskühler, N2-Innertisierung, Temperaturregelung über Wasserbad mit Tauchsieder, Rührer; 180Upm

Fahrweise:

Vorlage wird innertisiert und auf 70°C aufgeheizt. Bei Erreichen der Temperatur wird Zulauf 1 in 10 min zudosiert, 5 min rühren. Zulauf 2 wird gestartet und in 18 min zudosiert, die Temperatur wird von 70 auf 80°C gebracht. Während des Zulaufs das Anspringen des Versuches beobachten. Nach Zulaufende von Zulauf 2 werden die Zuläufe 3 und 5 gestartet und in 3 Stunden zudosiert sowie die Seife von Zulauf 4. Methacrylamid wird erst nach 60 min zudosiert.
Nach Zulaufende wird noch 45 min bei 80°C nachpolymerisiert. Ansatz wird auf Raumtemperatur gebracht, filtriert und abgefüllt.

Beispiel 5

In der Tabelle 8 sind die Komponenten und Mengen der jeweiligen Zuläufe illustriert.

Tabelle 8

|  |  | Menge [g] | Einsatzstoff | Gehalt % | pphm | mol | Volumen [l] | Gewichtsprozente |
|---|---|---|---|---|---|---|---|---|
| Vorlage | 1 | 504,70 | VE-Wasser | 100,00 | 71,65 | 28,008 | 504,7 | 28,52 |
|  | 2 | 0,66 | Emulgator K 30 | 40,00 | 0,04 | 0,001 | 0,66 | 0,04 |
| Zulauf 1 | 1 | 1,53 | Natriumperoxodisulfat | 100,00 | 0,22 | 0,006 | 1,53 | 0,09 |
|  | 2 | 21,86 | VE-Wasser | 100,00 | 3,10 | 1,213 | 21,86 | 1,235202712 |
| Zulauf 2 | 1 | 75,20 | Ethylacrylat | 100,00 | 10,68 | 0,751 | 75,2 | 4,25 |
| Zulauf 3 | 1 | 597,20 | Ethylacrylat | 100,00 | 84,78 | 5,965 | 597,2 | 33,74 |
| Zulauf 4 | 1 | 213,60 | Methacrylamid | 15,00 | 4,55 | 0,376 | 213,6 | 12,07 |
|  | 2 | 24,70 | Emulgator K30 | 40,00 | 1,40 | 0,033 | 24,7 | 1.395677356 |
|  | 3 | 129,10 | VE-Wasser | 100,00 | 18,33 | 7,164 | 129,1 | 7,294815652 |
| Zulauf 5 | 1 | 1,20 | Natriumperoxodisulfat | 100,00 | 0,17 | 0,005 | 1,2 | 0,07 |
|  | 2 | 200,00 | VE-Wasser | 100,00 | 28,39 | 11,099 | 200 | 11,30103122 |

Ergebnisse:

Tabelle 9

| | | | Bedingungen | Messwert | Einheit |
|---|---|---|---|---|---|
| Endprobe | 1 | Teilchengröße | HDC, d(0,1) | 109 | nm |
| | 2 | Teilchengröße | HDC, d(0,5) | 123 | nm |
| | 3 | Teilchengröße | HDC, d(0,9) | 138 | nm |
| | 4 | Feststoffgehalt | Automat Mettler, 10 h, 200 | 39,7 | % |

Apparatur: 2l Vierhalskolben mit Metallrührer, Rückflusskühler, N2-Innertisierung, Temperaturregelung über Wasserbad mit Tauchsieder, Rührer; 180Upm

Fahrweise:

Vorlage wird innertisiert und auf 70°C aufgeheizt. Bei Erreichen der Temperatur wird Zulauf 1 in 10 min zudosiert, 5 min rühren. Zulauf 2 wird gestartet und in 18 min zudosiert, die Temperatur wird von 70 auf 80°C gebracht. Während des Zulaufs das Anspringen des Versuches beobachten. Nach Zulaufende von Zulauf 2 werden die Zuläufe 3 und 5 gestartet und in 3 Stunden zudosiert sowie die Seife von Zulauf 4. Methacrylamid wird erst nach 30 min zudosiert.
Nach Zulaufende wird noch 45 min bei 80°C nachpolymerisiert. Ansatz wird auf Raumtemperatur gebracht, filtriert und abgefüllt.

3) Herstellung der agglomerierten Pfropfgrundlage (B1)

Allgemeine Vorgehensweise:

Zuerst wird der Latex der Pfropfgrundlage (B1a) (siehe Beispiel 1) vorgelegt und gerührt. Der Latex des agglomerierend wirkenden Copolymers (C) (Beispiele 1 bis 4) wird mit ent-mineralisiertem Wasser (VE) verdünnt. Dann wird dieser verdünnte Latex zur Agglomeration der Pfropfgrundlage (B1a) unter Rühren zugegeben.
Danach wird Kaliumstearat, gelöst in entmineralisiertem Wasser, dem agglomerierten Latex der Pfropfgrundlage (B1) unter fortgesetztem Rühren zugesetzt.
Die Teilchengrößenverteilung der agglomerierten Pfropfgrundlage (B1) wird gemessen. Nur ein Bruchteil der Teilchen in dem Latex der Pfropfgrundlage (B1) wird zu größeren Partikeln agglomeriert.

4) Herstellung des Pfropfcopolymers (B)

Allgemeine Vorgehensweise:

Nach Beendigung des Agglomerationsschrittes werden Kaliumpersulfat, gelöst in Gew.-Teilen entmineralisiertem Wasser, dem agglomerierten Latex der Pfropfgrundlage (B1) unter fortgesetztem Rühren zugesetzt. Ein Monomergemisch von Styrol und Acrylnitril wird innerhalb von zugegeben, während das Rühren fortgesetzt wird. Innerhalb dieses Zeitraums der Zuführung des Styrol/Acrylnitril-Gemisches kann die Temperatur erhöht werden. Nach Beendigung der Zuführung des Styrol/Acrylnitril-Gemisches werden Kaliumpersulfat, gelöst in entmineralisiertem Wasser, unter fortgesetztem Rühren zugesetzt. Die Polymerisation wird fortgesetzt und der erhaltene Latex des Pfropfcopolymers (B) wird auf Umgebungstemperatur abgekühlt.
Zu dem erhaltenen Pfropfcopolymerlatex (enthaltend das Propfcopolymer (B1)) werden einer Dispersion eines Stabilisators zugegeben und anschließend mit einer Magnesiumsulfat-Lösung ausgefällt. Nach dem Filtrieren des Pfropfcopolymers, wird der Niederschlag zweimal mit entmineralisiertem Wasser gewaschen und im Trockenschrank bis zu einer Restfeuchte von weniger als 1 Gew.-% getrocknet.

Beispiel 6

In der Tabelle 10 sind die Komponenten und Mengen der jeweiligen Zuläufe illustriert.
In den folgenden Beispielen wird eine Polybutadien-Dispersion verwendet.

Tabelle 10

| | | Menge [g] | Einsatzstoff | Gehalt % | pphm | mol | Volumen [l] | Gewichtsprozente |
|---|---|---|---|---|---|---|---|---|
| Vorlage | 1 | 4350,23 | PB 904 Dispersion | 43,40 | 143,90 | | 4,35 | 53,95 |
| | 2 | 369,77 | VE-Wasser | 100,00 | 28,18 | 20,52 | 0,37 | 4,59 |
| Zulauf 1 | 1 | 109,38 | Agglonal 574 | 39,70 | 3,31 | | 0,11 | 1,36 |
| | 2 | 324,86 | VE-Wasser | 100,00 | 24,76 | 18,03 | 0,32 | 4,03 |
| Zugabe 1 | 1 | 1311,10 | VE-Wasser | 100,00 | 99,93 | 72,76 | 1,31 | 16,26 |
| | 2 | 17,94 | Kaliumstearat | 100,00 | 1,37 | | 0,02 | 0,22 |
| Zugabe 2 | 1 | 100,00 | VE-Wasser | 100,00 | 7,62 | 5,55 | 0,10 | 1,24 |
| | 2 | 2,36 | Kaliumperoxodisulfat | 100,00 | 0,18 | 0,01 | 0,00 | 0,03 |
| Zulauf 2a | 1 | 262,40 | Styrol | 100,00 | 20,00 | 2,52 | 0,26 | 3,25 |
| | 2 | 65,60 | Acrylnitril | 100,00 | 5,00 | 1,24 | 0,07 | 0,81 |
| Zulauf 2b | 1 | 787,20 | Styrol | 100,00 | 60,00 | 7,56 | 0,79 | 9,76 |
| | 2 | 196,80 | Acrylnitril | 100,00 | 15,00 | 3,71 | 0,20 | 2,44 |
| Zugabe 3 | 1 | 100,00 | VE-Wasser | 100,00 | 7,62 | 5,55 | 0,10 | 1,24 |
| | 2 | 2,36 | Kaliumperoxodisulfat | 100,00 | 0,18 | 0,01 | 0,00 | 0,03 |
| Zugabe 4 | 1 | 64,00 | Wingstay L | 10,00 | 0,49 | | 0,06 | 0,79 |

Es werden jeweils zwei Proben vermessen:

Tabelle 11

| Proben name | | Beschreibung der Probe |
|---|---|---|
| P1 | GM 28/01 | nach Zugabe 1 |
| P2 | GM 28 | Endprobe |

In der Tabelle 12 sind die physikalischen Messwerte wiedergegeben.

Tabelle 12

| | | | Bedingungen | Messwert | Einheit | Bemerkung |
|---|---|---|---|---|---|---|
| | 1 | Teilchengröße | HDC, d(0,1) | 82 | nm | Peak 1 |
| | 2 | Teilchengröße | HDC, d(0,5) | 96 | nm | Peak 1 |
| | 3 | Teilchengröße | HDC, d(0,9) | 111 | nm | Peak 1 |
| | 4 | Teilchengröße | HDC, d(0,1) | 452 | nm | Peak 2 |
| | 5 | Teilchengröße | HDC, d(0,5) | 492 | nm | Peak 2 |
| P1 | 6 | Teilchengröße | HDC, d(0,9) | 537 | nm | Peak 2 |
| | 7 | Feststoffgehalt | Automat Mettler, 200 °C | 29,6 | % | |
| | 9 | Gehalt | GC, Styrol | | ppm | |
| | 10 | Gehalt | GC, Acrylnitril | | ppm | |
| | 11 | Gehalt | GC, Butadien | | ppm | |
| | 12 | Gehalt | GC, Ethylbenzol | | ppm | |

(fortgesetzt)

| | | | Bedingungen | Messwert | Einheit | Bemerkung |
|---|---|---|---|---|---|---|
| P2 | 1 | Teilchengröße | HDC, d(0,1) | 112 | nm | Peak 1 |
| | 2 | Teilchengröße | HDC, d(0,5) | 128 | nm | Peak 1 |
| | 3 | Teilchengröße | HDC, d(0,9) | 145 | nm | Peak 1 |
| | 4 | Teilchengröße | HDC, d(0,1) | 417 | nm | Peak 2 |
| | 5 | Teilchengröße | HDC, d(0,5) | 451 | nm | Peak 2 |
| | 6 | Teilchengröße | HDC, d(0,9) | 490 | nm | Peak 2 |
| | 7 | Feststoffgehalt | Automat Mettler, 200 °C | 40,5 | % | |
| | 8 | Koagulat | im Filter | 31 | g | |
| | 9 | Gehalt | GC, Styrol | | ppm | |
| | 10 | Gehalt | GC, Acrylnitril | | ppm | |
| | 11 | Gehalt | GC, Butadien | | ppm | |
| | 12 | Gehalt | GC, Ethylbenzol | | ppm | |

Fahrweise:

Vorlage bei 180 Upm gerührt und auf 68°C aufgeheizt. Zulauf 1 wird gestartet und in 25 min zudosiert. Anschließend wird 5 min nachgerührt. Während der Agglomeration bleibt die Drehzahl auf 180 Upm. Danach Zugabe 1 und dann Probe nehmen, ca. 10 ml. Dann Zugabe 2 und Drehzahl auf 220 Upm umstellen. Zulauf 2a starten und in 34 min bei 68°C zudosieren. Dann 10 min anpolymerisieren.

Zulauf 2b wird in 120 min zudosiert. Während des Zulaufes die Temperatur linear von 68°C auf 80°C ansteigen lassen. Nach Zulaufende erfolgt Zugabe 3. Versuch wird 60 min bei 80°C nachpolymerisiert. Ansatz kühlen und Zugabe 4.

In Figur 1 ist die Größenverteilung der Probe nach Zugabe 1 (GM 28/01) und der Endprobe (GM 28) dargestellt.

Beispiel 7

In der Tabelle 13 sind die Komponenten und Mengen der jeweiligen Zuläufe illustriert.

Tabelle 13

| | | Menge [g] | Einsatzstoff | Gehalt % | pphm | mol | Volumen [l] | Gewichtsprozente |
|---|---|---|---|---|---|---|---|---|
| Vorlage | 1 | 4350,23 | PB 904 Dispersion | 43,40 | 143,90 | | 4,35 | 53,95 |
| | 2 | 369,77 | VE-Wasser | 100,00 | 28,18 | 20,52 | 0,37 | 4,59 |
| Zulauf 1 | 1 | 108,56 | Agglonal 574 | 40,00 | 3,31 | | 0,11 | 1,35 |
| | 2 | 325,68 | VE-Wasser | 100,00 | 24,82 | 18,07 | 0,33 | 4,04 |
| Zugabe 1 | 1 | 1311,10 | VE-Wasser | 100,00 | 99,93 | 72,76 | 1,31 | 16,26 |
| | 2 | 17,94 | Kaliumstearat | 100,00 | 1,37 | | 0,02 | 0,22 |
| Zugabe 2 | 1 | 100,00 | VE-Wasser | 100,00 | 7,62 | 5,55 | 0,10 | 1,24 |
| | 2 | 2,36 | Kaliumperoxodisulfat | 100,00 | 0,18 | 0,01 | 0,00 | 0,03 |
| Zulauf 2a | 1 | 262,40 | Styrol | 100,00 | 20,00 | 2,52 | 0,26 | 3,25 |
| | 2 | 65,60 | Acrylnitril | 100,00 | 5,00 | 1,24 | 0,07 | 0,81 |
| Zulauf 2b | 1 | 787,20 | Styrol | 100,00 | 60,00 | 7,56 | 0,79 | 9,76 |
| | 2 | 196,80 | Acrylnitril | 100,00 | 15,00 | 3,71 | 0,20 | 2,44 |
| Zugabe 3 | 1 | 100,00 | VE-Wasser | 100,00 | 7,62 | 5,55 | 0,10 | 1,24 |
| | 2 | 2,36 | Kaliumperoxodisulfat | 100,00 | 0,18 | 0,01 | 0,00 | 0,03 |
| Zugabe 4 | 1 | 64,00 | Wingstay L | 10,00 | 0,49 | | 0,06 | 0,79 |

Es werden jeweils zwei Proben vermessen:

Tabelle 14

| Proben name | | Beschreibung der Probe |
|---|---|---|
| P1 | GM 29/01 | nach Zugabe 1 |
| P2 | GM 29 | Endprobe |

In der Tabelle 15 sind die physikalischen Messwerte wiedergegeben.

Tabelle 15

| | | | Bedingungen | Messwert | Einheit | Bemerkung |
|---|---|---|---|---|---|---|
| P1 | 1 | Teilchengröße | HDC, d(0,1) | 82 | nm | Peak 1 |
| | 2 | Teilchengröße | HDC, d(0,5) | 96 | nm | Peak 1 |
| | 3 | Teilchengröße | HDC, d(0,9) | 111 | nm | Peak 1 |
| | 4 | Teilchengröße | HDC, d(0,1) | 460 | nm | Peak 2 |
| | 5 | Teilchengröße | HDC, d(0,5) | 502 | nm | Peak 2 |
| | 6 | Teilchengröße | HDC, d(0,9) | 555 | nm | Peak 2 |
| | 7 | Feststoffgehalt | Automat Mettler, 200 °C | | % | |
| | 9 | Gehalt | GC, Styrol | | ppm | |
| | 10 | Gehalt | GC, Acrylnitril | | ppm | |
| | 11 | Gehalt | GC, Butadien | | ppm | |
| | 12 | Gehalt | GC, Ethylbenzol | | ppm | |
| P2 | 1 | Teilchengröße | HDC, d(0,1) | 115 | nm | Peak 1 |
| | 2 | Teilchengröße | HDC, d(0,5) | 131 | nm | Peak 1 |
| | 3 | Teilchengröße | HDC, d(0,9) | 149 | nm | Peak 1 |
| | 4 | Teilchengröße | HDC, d(0,1) | 412 | nm | Peak 2 |
| | 5 | Teilchengröße | HDC, d(0,5) | 448 | nm | Peak 2 |
| | 6 | Teilchengröße | HDC, d(0,9) | 490 | nm | Peak 2 |
| | 7 | Feststoffgehalt | Automat Mettler, 200 °C | 39 | % | |
| | 8 | Koagulat | im Filter | 54 | g | |
| | 9 | Gehalt | GC, Styrol | | ppm | |
| | 10 | Gehalt | GC, Acrylnitril | | ppm | |
| | 11 | Gehalt | GC, Butadien | | ppm | |
| | 12 | Gehalt | GC, Ethylbenzol | | ppm | |

Fahrweise:

Vorlage bei 180 Upm gerührt und auf 68°C aufgeheizt. Zulauf 1 wird gestartet und in 25 min zudosiert. Anschließend wird 5 min nachgerührt. Während der Agglomeration bleibt die Drehzahl auf 180 Upm. Danach Zugabe 1 und dann Probe nehmen, ca. 10 ml. Dann Zugabe 2 und Drehzahl auf 220 Upm umstellen. Zulauf 2a starten und in 34 min bei 68°C zudosieren. Dann 10 min anpolymerisieren. Zulauf 2b wird in 120 min zudosiert. Während des Zulaufes die Temperatur linear von 68°C auf 80°C ansteigen lassen. Nach Zulaufende erfolgt Zugabe 3. Versuch wird 60 min bei 80°C nachpolymerisiert. Ansatz kühlen und Zugabe 4.

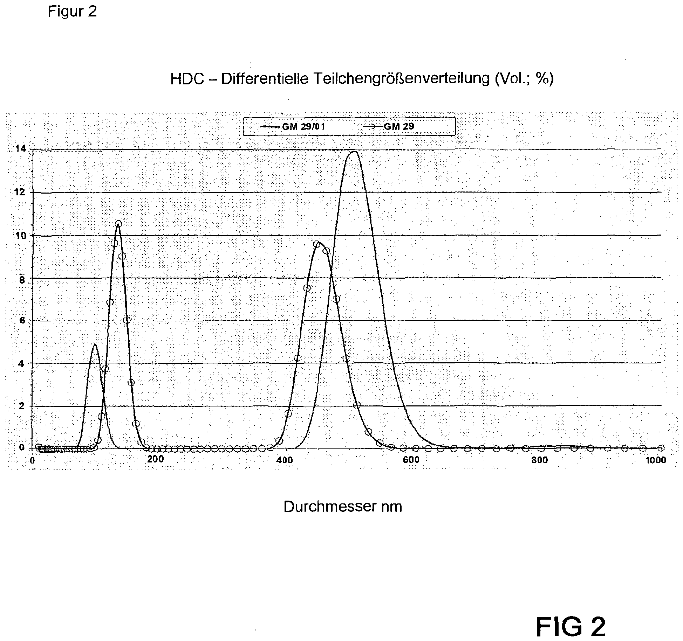

In Figur 2 ist die Größenverteilung der Probe nach Zugabe 1 (GM 29/01) und der Endprobe (GM 29) dargestellt.

Beispiel 8

In der Tabelle 16 sind die Komponenten und Mengen der jeweiligen Zuläufe illustriert.

Tabelle 16

| | | Menge [g] | Einsatzstoff | Gehalt % | pphm | mol | Volumen [l] | Gewichtsprozente |
|---|---|---|---|---|---|---|---|---|
| Vorlage | 1 | 4350,23 | PB 904 Dispersion | 43,40 | 143,90 | | 4,35 | 53,95 |
| | 2 | 369,77 | VE-Wasser | 100,00 | 28,18 | 20,52 | 0,37 | 4,59 |
| Zulauf 1 | 1 | 107,75 | Agglonal 574 | 40,30 | 3,31 | | 0,11 | 1,34 |
| | 2 | 326,49 | VE-Wasser | 100,00 | 24,88 | 18,12 | 0,33 | 4,05 |
| Zugabe 1 | 1 | 1311,10 | VE-Wasser | 100,00 | 99,93 | 72,76 | 1,31 | 16,26 |
| | 2 | 17,94 | Kaliumstearat | 100,00 | 1,37 | | 0,02 | 0,22 |
| Zugabe 2 | 1 | 100,00 | VE-Wasser | 100,00 | 7,62 | 5,55 | 0,10 | 1,24 |
| | 2 | 2,36 | Kaliumperoxodisulfat | 100,00 | 0,18 | 0,01 | 0,00 | 0,03 |
| Zulauf 2a | 1 | 262,40 | Styrol | 100,00 | 20,00 | 2,52 | 0,26 | 3,25 |
| | 2 | 65,60 | Acrylnitril | 100,00 | 5,00 | 1,24 | 0,07 | 0,81 |
| Zulauf 2b | 1 | 787,20 | Styrol | 100,00 | 60,00 | 7,56 | 0,79 | 9,76 |
| | 2 | 196,80 | Acrylnitril | 100,00 | 15,00 | 3,71 | 0,20 | 2,44 |
| Zugabe 3 | 1 | 100,00 | VE-Wasser | 100,00 | 7,62 | 5,55 | 0,10 | 1,24 |
| | 2 | 2,36 | Kaliumperoxodisulfat | 100,00 | 0,18 | 0,01 | 0,00 | 0,03 |
| Zugabe 4 | 1 | 64,00 | Wingstay L | 10,00 | 0,49 | | 0,06 | 0,79 |

Es werden jeweils zwei Proben vermessen:

Tabelle 17

| Proben name | | Beschreibung der Probe |
|---|---|---|
| P1 | GM 35/01 | nach Zugabe 1 |
| P2 | GM 35 | Endprobe |

In der Tabelle 18 sind die physikalischen Messergebnisse wiedergegeben.

Tabelle 18

| | | | Bedingungen | Messwert | Einheit | Bemerkung |
|---|---|---|---|---|---|---|
| | 1 | Teilchengröße | HDC, d(0,1) | 83 | nm | Peak 1 |
| | 2 | Teilchengröße | HDC, d(0,5) | 97 | nm | Peak 1 |
| | 3 | Teilchengröße | HDC, d(0,9) | 112 | nm | Peak 1 |
| | 4 | Teilchengröße | HDC, d(0,1) | 374 | nm | Peak 2 |
| | 5 | Teilchengröße | HDC, d(0,5) | 413 | nm | Peak 2 |
| P1 | 6 | Teilchengröße | HDC, d(0,9) | 457 | nm | Peak 2 |
| | 7 | Feststoffgehalt | Automat Mettler, 200 °C | 29,7 | % | |
| | 9 | Gehalt | GC, Styrol | | ppm | |
| | 10 | Gehalt | GC, Acrylnitril | | ppm | |
| | 11 | Gehalt | GC, Butadien | | ppm | |
| | 12 | Gehalt | GC, Ethylbenzol | | ppm | |

(fortgesetzt)

| | | | Bedingungen | Messwert | Einheit | Bemerkung |
|---|---|---|---|---|---|---|
| P2 | 1 | Teilchengröße | HDC, d(0,1) | 113 | nm | Peak 1 |
| | 2 | Teilchengröße | HDC, d(0,5) | 129 | nm | Peak 1 |
| | 3 | Teilchengröße | HDC, d(0,9) | 146 | nm | Peak 1 |
| | 4 | Teilchengröße | HDC, d(0,1) | 352 | nm | Peak 2 |
| | 5 | Teilchengröße | HDC, d(0,5) | 384 | nm | Peak 2 |
| | 6 | Teilchengröße | HDC, d(0,9) | 420 | nm | Peak 2 |
| | 7 | Feststoffgehalt | Automat Mettler, 200 °C | 39,4 | % | |
| | 8 | Koagulat | im Filter | 32 | g | |
| | 9 | Gehalt | GC, Styrol | | ppm | |
| | 10 | Gehalt | GC, Acrylnitril | | ppm | |
| | 11 | Gehalt | GC, Butadien | | ppm | |
| | 12 | Gehalt | GC, Ethylbenzol | | ppm | |

Fahrweise:

Vorlage bei 180 Upm gerührt und auf 68°C aufgeheizt. Zulauf 1 wird gestartet und in 25 min zudosiert. Anschließend wird 5 min nachgerührt. Während der Agglomeration bleibt die Drehzahl auf 180 Upm. Danach Zugabe 1 und dann Probe nehmen, ca. 10 ml. Dann Zugabe 2 und Drehzahl auf 220 Upm umstellen. Zulauf 2a starten und in 34 min bei 68°C zudosieren. Dann 10 min anpolymerisieren. Zulauf 2b wird in 120 min zudosiert.

Während des Zulaufes die Temperatur linear von 68°C auf 80°C ansteigen lassen. Nach Zulaufende erfolgt Zugabe 3. Versuch wird 60 min bei 80°C nachpolymerisiert. Ansatz kühlen und Zugabe 4.

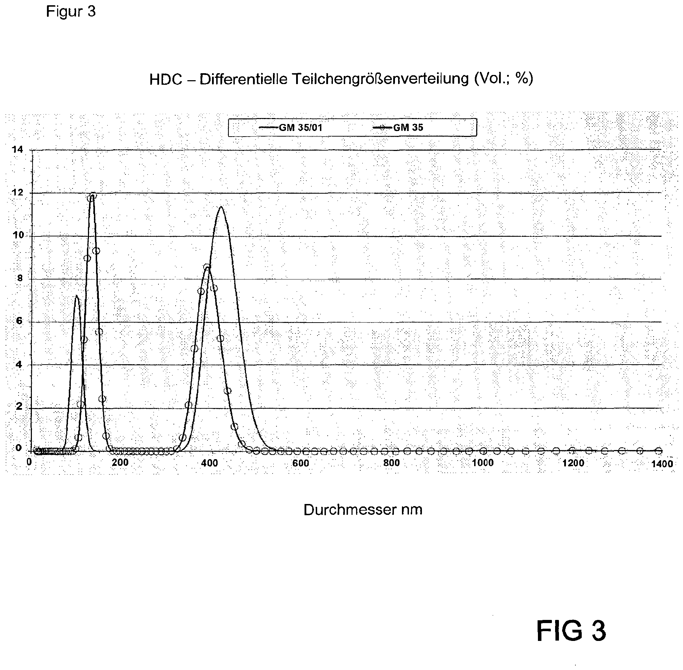

In Figur 3 ist die Größenverteilung der Probe nach Zugabe 1 (GM 35/01) und der Endprobe (GM 35) dargestellt.

Beispiel 9

In der Tabelle 19 sind die Komponenten und Mengen der jeweiligen Zuläufe illustriert.

Tabelle 19

| | | Menge [g] | Einsatzstoff | Gehalt % | pphm | mol | Volumen [l] | Gewichtsprozente |
|---|---|---|---|---|---|---|---|---|
| Vorlage | 1 | 4350,23 | PB 904 Dispersion | 43,40 | 143,90 | 20,52 | 4,35 | 53,95 |
| | 2 | 369,77 | VE-Wasser | 100,00 | 28,18 | | 0,37 | 4,59 |
| Zulauf 1 | 1 | 108,29 | Agglonal 574 | 40,10 | 3,31 | 18,09 | 0,11 | 1,34 |
| | 2 | 325,95 | VE-Wasser | 100,00 | 24,84 | | 0,33 | 4,04 |
| Zugabe 1 | 1 | 1311,10 | VE-Wasser | 100,00 | 99,93 | 72,76 | 1,31 | 16,26 |
| | 2 | 17,94 | Kaliumstearat | 100,00 | 1,37 | | 0,02 | 0,22 |
| Zugabe 2 | 1 | 100,00 | VE-Wasser | 100,00 | 7,62 | 5,55 | 0,10 | 1,24 |
| | 2 | 2,36 | Kaliumperoxodisulfat | 100,00 | 0,18 | 0,01 | 0,00 | 0,03 |
| Zulauf 2a | 1 | 262,40 | Styrol | 100,00 | 20,00 | 2,52 | 0,26 | 3,25 |
| | 2 | 65,60 | Acrylnitril | 100,00 | 5,00 | 1,24 | 0,07 | 0,81 |
| Zulauf 2b | 1 | 787,20 | Styrol | 100,00 | 60,00 | 7,56 | 0,79 | 9,76 |
| | 2 | 196,80 | Acrylnitril | 100,00 | 15,00 | 3,71 | 0,20 | 2,44 |
| Zugabe 3 | 1 | 100,00 | VE-Wasser | 100,00 | 7,62 | 5,55 | 0,10 | 1,24 |
| | 2 | 2,36 | Kaliumperoxodisulfat | 100,00 | 0,18 | 0,01 | 0,00 | 0,03 |
| Zugabe 4 | 1 | 64,00 | Wingstay L | 10,00 | 0,49 | | 0,06 | 0,79 |

Es werden jeweils zwei Proben vermessen:

Tabelle 20

| Proben name | | Beschreibung der Probe |
|---|---|---|
| P1 | GM 37/01 | nach Zugabe 1 |
| P2 | GM 37 | Endprobe |

In der Tabelle 21 sind die physikalischen Messergebnisse wiedergegeben.

Tabelle 21

| | | | Bedingungen | Messwert | Einheit | Bemerkung |
|---|---|---|---|---|---|---|
| P1 | 1 | Teilchengröße | HDC, d(0,1) | 83 | nm | Peak 1 |
| | 2 | Teilchengröße | HDC, d(0,5) | 98 | nm | Peak 1 |
| | 3 | Teilchengröße | HDC, d(0,9) | 114 | nm | Peak 1 |
| | 4 | Teilchengröße | HDC, d(0,1) | 445 | nm | Peak 2 |
| | 5 | Teilchengröße | HDC, d(0,5) | 485 | nm | Peak 2 |
| | 6 | Teilchengröße | HDC, d(0,9) | 533 | nm | Peak 2 |
| | 7 | Feststoffgehalt | Automat Mettler, 200 °C | 30,7 | % | |
| P2 | 1 | Teilchengröße | HDC, d(0,1) | 109 | nm | Peak 1 |
| | 2 | Teilchengröße | HDC, d(0,5) | 125 | nm | Peak 1 |
| | 3 | Teilchengröße | HDC, d(0,9) | 144 | nm | Peak 1 |
| | 4 | Teilchengröße | HDC, d(0,1) | 403 | nm | Peak 2 |
| | 5 | Teilchengröße | HDC, d(0,5) | 439 | nm | Peak 2 |
| | 6 | Teilchengröße | HDC, d(0,9) | 481 | nm | Peak 2 |
| | 7 | Feststoffgehalt | Automat Mettler, 200 °C | 39,7 | % | |
| | 8 | Koagulat | im Filter | 19 | g | |

Fahrweise:

Vorlage bei 180 Upm gerührt und auf 68°C aufgeheizt. Zulauf 1 wird gestartet und in 25 min zudosiert. Anschließend wird 5 min nachgerührt. Während der Agglomeration bleibt die Drehzahl auf 180 Upm. Danach Zugabe 1 und dann Probe nehmen, ca. 10 ml. Dann Zugabe 2 und Drehzahl auf 220 Upm umstellen. Zulauf 2a starten und in 34 min bei 68°C zudosieren. Dann 10 min anpolymerisieren. Zulauf 2b wird in 120 min zudosiert. Während des Zulaufes die Temperatur linear von 68°C auf 80°C ansteigen lassen. Nach Zulaufende erfolgt Zugabe 3. Versuch wird 60 min bei 80°C nachpolymerisiert. Ansatz kühlen und Zugabe 4.

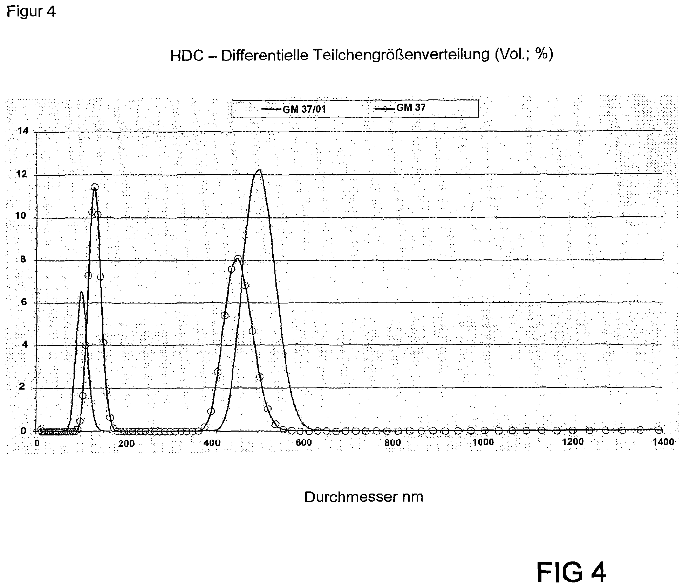

In Figur 4 ist die Größenverteilung der Probe nach Zugabe 1 (GM 37/01) und der Endprobe (GM 37) dargestellt.

5) Thermoplastische Formmassen aus SAN-Polymer und Pfropfcopolymer B

Eingesetztes thermoplastisches Copolymer A

Als SAN Polymer wurde eingesetzt: Statistisches Copolymer aus Styrol und Acrylnitril mit einem Verhältnis von Styrol zu Acrylnitril von 75:25 mit einer Viskositätszahl von 64 ml/g (Konzentration 5 g/l in Dimethylformamid bei 20°C gemessen) und einer Schmelzflussrate MVR von 64 [ml/10 min], gemessen bei 220°C und 10 kg Belastung nach ISO 1133, hergestellt durch radikalische Lösungspolymerisation.

Eingesetzte Zusatzstoffe D

Silikonöl: Polydimethylsiloxan mit einer kinematischen Viskosität von 30.000 mm$^2$/s

Das SAN-Polymer und ein vorgenanntes Pfropfcopolymer (B) werden in einem Doppelschneckenextruder mit einem Wellendurchmesser von 25 mm gemischt. In der Extrusionszone wurde die Temperatur auf 200 bis 250°C eingestellt und die Verarbeitung erfolgte bei 700 UpM des Doppelschneckenextruders. Die Batch-Größe für alle Beispiele war 4 kg.

Mit den erhaltenen ABS-Formmassen wurden Tests zur Bestimmung der Fließfähigkeit (MVR), der Charpy-Kerbschlagzähigkeit, des Yellowness Index (YI), und des Oberflächenglanzes durchgeführt. Dabei wurden die oben aufgeführten Testmethoden angewandt.

In der folgenden Tabellen 22 und 23 sind die entsprechenden physikalischen Eigenschaften für die erfindungsgemäße Formmasse zu finden.

Tabelle 22

| Verzögerte Zugabe (MAM feed) | Charpy IZOD RT [kJ/m$^2$] | Charpy IZOD -20°C [kJ/m$^2$] | MVR [mL/ 10 min] | Hardness Hc 30" | Yellowness Index | Oberflächenglanz 20° | Partikelgröße (Aggl. fraktion) | U (Aggl. fraktion) |
|---|---|---|---|---|---|---|---|---|
| keine Verzögerung | 26,1 | 10,5 | 9,3 | 105 | 20,8 | 77 | 438 | 0,18 |
| 15 min. | 28,1 | 11,7 | 8,6 | 104 | 17,4 | 91 | 442 | 0,18 |
| 30 min. | 27,9 | 11,8 | 9,0 | 103 | 19,3 | 89 | 457 | 0,17 |
| 60 min. | 27,3 | 11,4 | 9,6 | 104 | 17,9 | 90 | 456 | 0,17 |

Tabelle 23

| Verzögerte Zugabe MAM feed | Durchstoß (WT/J) | KautschukGehalt [%] |
|---|---|---|
| keine Verzögerung | 22,6 | 34,6 |
| 15 min. | 24,2 | 36,5 |
| 30 min. | 24,7 | 35,3 |
| 60 min. | 18,4 | 32,9 |

Die Daten aus den Tabellen 22 und 23 zeigen, dass die erfindungsgemäßen ABS-Formmassen, die ein erfindungsgemäß erhaltenes Pfropfpolymer (B) enthalten, sehr gute Kerbschlagzähigkeiten und darüber hinaus einen deutlich verbesserten Oberflächenglanz aufweisen.

In Figur 5 wird die Charpy-Kerbschlagzähigkeit von der Endformmasse illustriert. Aus dieser Formmasse können verschiedene Formkörper, Folien und Beschichtungen hergestellt werden.

**Patentansprüche**

1.  Verfahren zur Herstellung eines agglomerierend wirkenden Copolymers (C), erhalten durch

   i)  Polymerisation von (C1):     80 bis 99,9 Gew.-% von einem oder mehreren hydrophoben $C_1$- bis $C_{12}$-Alkylacrylaten oder $C_1$- bis $C_{12}$-Alkylmethacrylaten,

   ii)  Zugabe mindestens eines     Emulgators (E),

   iii)  Zugabe und Polymerisation von (C2):     0,1 bis 20 Gew.-% ein oder mehreren hydrophilen Comonomeren ausgewählt aus der Gruppe bestehend aus Acrylamid und Methacrylamid, wobei (C1) und (C2) 100 Gew.-% ergeben,

   wobei die Zugabe von (C2) nach der Zugabe von (E) im Schritt ii) erfolgt.

2.  Agglomerierend wirkendes Copolymer (C), erhalten durch ein Verfahren gemäß Anspruch 1.

3.  Verfahren zur Herstellung eines Pfropfcopolymers (B) aufgebaut aus:

   (B1): einer agglomerierten Pfropfgrundlage (B1), erhalten durch

      (a) Polymerisation von mindestens einem ethylenisch ungesättigtem Monomer (B10) zu einer Pfropfgrundlage (B1a), und
      (b) Agglomeration der unter (a) erhaltenen Pfropfgrundlage (B1a) durch Zugabe von 0,01 bis 5 Gew.-Teilen, bezogen auf 100 Gew.-Teile der Pfropfgrundlage (B1a), jeweils bezogen auf den Feststoffgehalt, mindestens eines agglomerierend wirkenden Copolymers (C) gemäß Anspruch 2, unter Erhalt von (B1),

   (B2): einer Pfropfhülle aus mindestens einem ethylenisch ungesättigtem Monomer (B20), erhältlich durch Umsetzung der agglomerierten Pfropfgrundlage (B1) mit dem mindestens einem ethylenisch ungesättigtem Monomer (B20),

   enthaltend die Schritte:

      (I) Polymerisieren von mindestens einem ethylenisch ungesättigtem Monomer (B10) in wässriger Emulsion zur Herstellung der Pfropfgrundlage (B1a),
      (II) Agglomeration der in der Emulsion vorliegenden Pfropfgrundlage (B1a) mittels mindestens eines agglomerierend wirkenden Copolymers (C) gemäß Anspruch 2 zur Herstellung der Pfropfgrundlage (B1), und nachfolgend
      (III) Polymerisieren von mindestens einem ethylenisch ungesättigten Monomer (B20) zu einer Pfropfhülle in wässriger Emulsion in Gegenwart der agglomerierten Pfropfgrundlage (B1).

4. Verfahren zur Herstellung eines Pfropfcopolymers (B) nach Anspruch 3, aufgebaut aus:

(B1): 40 bis 85 Gew.-%, bezogen auf den Feststoffgehalt des Pfropfcopolymers B einer agglomerierten Pfropfgrundlage (B1), aufgebaut aus einer Pfropfgrundlage (B1a), wobei (B1) erhalten wird durch

(a) Polymerisation von mindestens einem ethylenisch ungesättigtem Monomer (B10) zu einer Pfropfgrundlage (B1a), und
(b) Agglomeration der unter (a) erhaltenen Pfropfgrundlage (B1a) durch Zugabe von 0,01 bis 5 Gew.-Teilen, bezogen auf 100 Gew.-Teile der Pfropfgrundlage (B1a), jeweils bezogen auf den Feststoffgehalt, mindestens eines agglomerierend wirkenden Copolymers (C), unter Erhalt von (B1),

(B2): 15 bis 60 Gew.-%, bezogen auf den Feststoffgehalt des Pfropfcopolymers (B), einer Pfropfhülle aus mindestens einem ethylenisch ungesättigtem Monomer (B20), erhalten durch Umsetzung der agglomerierten Pfropfgrundlage (B1) mit dem mindestens einem ethylenisch ungesättigtem Monomer (B20),
wobei die Gesamtsumme aus Pfropfgrundlage (B1) und Pfropfhülle (B2) 100 Gew.-% ergibt,
wobei das mindestens eine agglomerierend wirkende Copolymer (C)erhalten wird durch

| | | |
|---|---|---|
| i) | Polymerisation von (C1): | 80 bis 99,9 Gew.-% ein oder mehreren hydrophoben $C_1$-bis $C_{12}$-Alkylacrylaten oder $C_1$- bis $C_{12}$-Alkylmethacrylaten, |
| ii) | Zugabe eines Emulgators (E), | |
| iii) | Zugabe und Polymerisation von (C2): | 0,1 bis 20 Gew.-% ein oder mehreren hydrophilen Comonomeren ausgewählt aus der Gruppe bestehend aus Acrylamid und Methacrylamid, wobei (C1) und (C2) 100 Gew.-% ergeben, |

wobei die Zugabe von (C2) 2 bis 100 min nach der Zugabe von (E) im Schritt ii) erfolgt.

5. Verfahren zur Herstellung eines Pfropfcopolymers (B) nach Anspruch 3 oder 4, aufgebaut aus:

(B1): 40 bis 85 Gew.-%, bezogen auf den Feststoffgehalt des Pfropfcopolymers (B) einer agglomerierten Pfropfgrundlage (B1), aufgebaut aus einer Pfropfgrundlage (B1a), wobei (B1) erhalten wird durch

(a) Polymerisation von:

(B11): 0 bis 10 Gew.-% oder 0 bis 21 Gew.-%, bezogen auf die Pfropfgrundlage (B1a), an Styrol, und
(B12): 90 bis 100 Gew.-% oder 79 bis 100 Gew.-%, bezogen auf die Pfropfgrundlage (B1a), Butadien,

wobei (B11) und (B12) 100 Gew.-% ergeben, und
(b) Agglomeration der unter (a) erhaltenen Pfropfgrundlage (B1a) durch Zugabe von 0,01 bis 5 Gew.-Teilen, bezogen auf 100 Gew.-Teile der Pfropfgrundlage (B1a), jeweils bezogen auf den Feststoffgehalt, mindestens eines agglomerierend wirkenden Copolymers (C), unter Erhalt von (B1), wobei (C) aufgebaut ist aus:

(C1): 80 bis 99,9 Gew.-% ein oder mehreren hydrophoben $C_1$-bis $C_{14}$-Alkylacrylaten oder $C_1$- bis $C_4$-Alkylmethacrylaten und
(C2): 0,1 bis 20 Gew.-% ein oder mehreren hydrophilen Comonomeren ausgewählt aus der Gruppe bestehend aus Acrylamid und Methacrylamid, wobei (C1) und (C2) 100 Gew.-% ergeben;

(B2): 15 bis 60 Gew.-%, bezogen auf den Feststoffgehalt des Pfropfcopolymers (B), einer Pfropfhülle aus mindestens einem ethylenisch ungesättigtem Monomer (B20), wobei (B20) eine Mischung aus den Monomeren (B21) und (B22) umfasst, erhalten durch Umsetzung der agglomerierten Pfropfgrundlage (B1) mit einer Mischung aus:

(B21) 70 bis 90 Gew.-%, bezogen auf die Pfropfhülle (B2), Styrol, und
(B22) 10 bis 30 Gew.-%, bezogen auf die Pfropfhülle (B2), Acrylnitril und/oder Methylmethacrylat, insbesondere Acrylnitril,

wobei die Gesamtsumme aus Pfropfgrundlage (B1) und Pfropfhülle (B2) 100 Gew.-% ergibt,

wobei das agglomerierend wirkende Copolymer (C) erhalten wird durch

| | | |
|---|---|---|
| i) | Polymerisation von (C1): | 80 bis 99,9 Gew.-% ein oder mehreren hydrophoben $C_1$-bis $C_4$-Alkylacrylaten oder $C_1$-bis $C_4$-Alkylmethacrylaten, |
| ii) | Zugabe mindestens eines Emulgators (E), | |
| iii) | Zugabe und Polymerisation | von (C2): 0,1 bis 20 Gew.-% ein oder mehreren hydrophilen Comonomeren ausgewählt aus der Gruppe bestehend aus Acrylamid und Methacrylamid, wobei (C1) und (C2) 100 Gew.-% ergeben, |

wobei die Zugabe von (C2) 2 bis 100 min nach der Zugabe von (E) im Schritt ii) erfolgt.

**6.** Verfahren zur Herstellung eines Pfropfcopolymers nach einem der Ansprüche 3 bis 5, wobei das agglomerierend wirkende Copolymer (C) eine Kern-Schalestruktur aufweist, wobei

- der Kern aus Monomeren (C1) besteht, und wobei
- die Schale aus 85 bis 99,9 Gew.-% Monomeren (C1) und 0,1 bis 15 Gew.-% Monomeren (C2) besteht,

wobei (C1) und (C2) in der Schale 100 Gew.-% ergeben.

**7.** Verfahren zur Herstellung eines Pfropfcopolymers nach einem der Ansprüche 3 bis 6, wobei der Kern des Copolymers (C) 3-20 Gew.-% und die Schale 80-97 Gew.-% des agglomerierend wirkenden Copolymers (C) ausmachen, wobei die Gesamtmenge von Kern und Schale 100 Gew.-% ergibt.

**8.** Verfahren zur Herstellung eines Pfropfcopolymers nach einem der Ansprüche 3 bis 7, wobei in Schritt iii) die Zugabe von (C2) 2 min nach der Zugabe von (E) im Schritt ii) erfolgt und 20 min andauert.

**9.** Verfahren zur Herstellung eines Pfropfcopolymers nach einem der Ansprüche 3 bis 8, wobei die Zugabe des mindestens einen Emulgators (E) und (C2) gleichzeitig endet.

**10.** Verfahren zur Herstellung eines Pfropfcopolymers nach einem der Ansprüche 3 bis 9, wobei die Zugabe des mindestens einen Emulgators (E), (C2) und dem für die Polymerisation von (C2) benötigten Initiators gleichzeitig endet.

**11.** Verfahren zur Herstellung eines Pfropfcopolymers nach einem der Ansprüche 3 bis 10, wobei die unter Schritt (a) erhaltene Pfropfgrundlage (B1a) durch Zugabe von 2,0 bis 3,0 Gew.-Teilen, bezogen auf 100 Gew.-Teile der Pfropfgrundlage (B1a), jeweils bezogen auf den Feststoffgehalt, mit mindestens einem agglomerierend wirkenden Copolymer (C) agglomeriert wird.

**12.** Pfropfcopolymer (B), erhalten durch ein Verfahren gemäß einem der Ansprüche 3 bis 11.

**13.** Thermoplastische Formmasse, enthaltend mindestens ein thermoplastisches Copolymer (A) und mindestens ein Pfropfcopolymer (B) gemäß Anspruch 12 sowie gegebenenfalls mindestens eine weitere Komponente K, wobei die Formmasse enthält:

(A): 40 bis 80 Gew.-% mindestens eines thermoplastischen Copolymers (A) erhältlich aus:

(A1): 20 bis 31 Gew.-%, bezogen auf das Copolymer (A), Acrylnitril, und
(A2): 69 bis 80 Gew.-%, bezogen auf das Copolymer (A), Styrol oder $\alpha$-Methylstyrol oder einer Mischung aus Styrol und $\alpha$-Methylstyrol, wobei die (A1) und (A2) 100 Gew.-% ergeben,

(B): 20 bis 60 Gew.-% mindestens eines Pfropfcopolymers (B); und
(K): 0 bis 5 Gew.-%, insbesondere 0,1 bis 5 Gew.-% weitere Komponenten (K), wobei die Summe aus (A), (B) und (K) 100 Gew.-% ergibt.

**14.** Thermoplastische Formmasse gemäß Anspruch 13, wobei das Copolymer (A) aus den Monomeren Styrol und Acrylnitril aufgebaut ist und das Pfropfcopolymer aus Butadien, Styrol und weiteren Monomeren aufgebaut ist.

**15.** Thermoplastische Formmasse gemäß Anspruch 13 oder 14, wobei die Formmasse zusätzlich mindestens ein weiteres thermoplastisches Polymer (TP), ausgewählt aus der Gruppe der Polycarbonate, Polyestercarbonate, Polyester und Polyamide enthält.

**16.** Verwendung einer thermoplastischen Formmasse gemäß einem der Ansprüche 13 bis 15 zur Herstellung von Formteilen, Folien oder Beschichtungen.

**Claims**

**1.** Process for preparing a copolymer (C) having an agglomerating effect, obtained by

i) polymerizing (C1): 80 to 99.9% by weight of one or more hydrophobic $C_1$- to $C_{12}$- alkyl acrylates or $C_1$- to $C_{12}$- alkyl methacrylates,
ii) adding at least one emulsifier (E),
iii) adding and
polymerizing (C2) : 0.1 to 20% by weight of one or more hydrophilic comonomers selected from the group consisting of acrylamide and
methacrylamide, wherein (C1)
and (C2) add up to 100% by weight,

wherein the addition of (C2) is carried out after the addition of (E) in step ii) .

**2.** Copolymer (C) having an agglomerating effect, obtained by a process according to Claim 1.

**3.** Process for preparing a graft copolymer (B), composed of:

(B1): an agglomerated graft base (B1), obtained by

(a) polymerizing at least one ethylenically unsaturated monomer (B10) to give a graft base (B1a), and
(b) agglomeration of the graft base (B1a) obtained in (a) by adding 0.01 to 5 parts by weight, based on 100 parts by weight of the graft base (B1a), based in each case on the solids content, of at least one copolymer (C) having an agglomerating effect according to Claim 2, to obtain (B1),

(B2) : a graft sheath composed of at least one ethylenically unsaturated monomer (B20), obtainable by reacting the agglomerated graft base (B1) with the at least one ethylenically unsaturated monomer (B20),

comprising the steps of:

(I) polymerizing at least one ethylenically unsaturated monomer (B10) in aqueous emulsion to prepare the graft base (B1a),
(II) agglomeration of the graft base (B1a) present in the emulsion by means of at least one copolymer (C) having an agglomerating effect according to Claim 2 to prepare the graft base (B1), and subsequently
(III) polymerizing at least one ethylenically unsaturated monomer (B20) to give a graft sheath in aqueous emulsion in the presence of the agglomerated graft base (B1).

**4.** Process for preparing a graft copolymer (B) according to Claim 3, composed of:

(B1) : 40 to 85% by weight, based on the solids content of the graft copolymer B, of an agglomerated graft base (B1), composed of a graft base (B1a), wherein (B1) is obtained by

(a) polymerizing at least one ethylenically unsaturated monomer (B10) to give a graft base (B1a), and
(b) agglomeration of the graft base (B1a) obtained in (a) by adding 0.01 to 5 parts by weight, based on 100 parts by weight of the graft base (B1a), based in each case on the solids content, of at least one copolymer (C) having an agglomerating effect, to obtain (B1),

(B2): 15 to 60% by weight, based on the solids content of the graft copolymer (B), of a graft sheath composed of at least one ethylenically unsaturated monomer (B20), obtained by reacting the agglomerated graft base (B1) with the at least one ethylenically unsaturated monomer (B20),
wherein the sum total of graft base (B1) and graft sheath (B2) adds up to 100% by weight,
wherein the at least one copolymer (C) having an agglomerating effect is obtained by

i) polymerizing (C1): 80 to 99.9% by weight of one or more hydrophobic $C_1$- to $C_{12}$-alkyl acrylates or $C_1$- to $C_{12}$-alkyl methacrylates,
ii) adding an emulsifier (E),
iii) adding and
polymerizing (C2) : 0.1 to 20% by weight of one or more hydrophilic comonomers selected from the group consisting of acrylamide and
methacrylamide, wherein (C1)
and (C2) add up to 100% by weight,

wherein the addition of (C2) is carried out 2 to 100 min after the addition of (E) in step ii).

5.   Process for preparing a graft copolymer (B) according to Claim 3 or 4, composed of:

(B1): 40 to 85% by weight, based on the solids content of the graft copolymer (B), of an agglomerated graft base (B1), composed of a graft base (B1a), wherein (B1) is obtained by

(a) polymerizing:

(B11) : 0 to 10% by weight or 0 to 21% by weight, based on the graft base (B1a), of styrene, and
(B12): 90 to 100% by weight or 79 to 100% by weight, based on the graft base (B1a), butadiene,

wherein (B11) and (B12) add up to 100% by weight, and
(b) agglomeration of the graft base (B1a) obtained in (a) by adding 0.01 to 5 parts by weight, based on 100 parts by weight of the graft base (B1a), based in each case on the solids content, of at least one copolymer (C) having an agglomerating effect, to obtain (B1), wherein (C) is composed of:

(C1): 80 to 99.9% by weight of one or more hydrophobic $C_1$- to $C_{14}$-alkyl acrylates or $C_1$- to $C_4$-alkyl methacrylates and
(C2): 0.1 to 20% by weight of one or more hydrophilic comonomers selected from the group consisting of acrylamide and methacrylamide, wherein (C1) and (C2) add up to 100% by weight;

(B2): 15 to 60% by weight, based on the solids content of the graft copolymer (B), of a graft sheath composed of at least one ethylenically unsaturated monomer (B20), wherein (B20) comprises a mixture of the monomers (B21) and (B22),

obtained by reacting the agglomerated graft base (B1) with a mixture of:

(B21) 70 to 90% by weight, based on the graft sheath (B2), styrene, and
(B22) 10 to 30% by weight, based on the graft sheath (B2), acrylonitrile and/or methyl methacrylate, especially acrylonitrile,

wherein the sum total of graft base (B1) and graft sheath (B2) adds up to 100% by weight,

wherein the copolymer (C) having an agglomerating effect is obtained by

i) polymerizing (C1): 80 to 99.9% by weight of one or more hydrophobic $C_1$- to $C_4$-alkyl acrylates or $C_1$- to $C_4$-alkyl methacrylates,
ii) adding at least one emulsifier (E),
iii) adding and
polymerizing (C2): 0.1 to 20% by weight of one or more hydrophilic comonomers selected from the group consisting of acrylamide and
methacrylamide, wherein (C1)
and (C2) add up to 100% by weight,

wherein the addition of (C2) is carried out 2 to 100 min after the addition of (E) in step ii).

6. Process for producing a graft copolymer according to any of Claims 3 to 5, wherein the copolymer (C) having an agglomerating effect has a core-shell structure, wherein

- the core consists of monomers (C1), and wherein
- the shell consists of 85 to 99.9% by weight of monomers (C1) and 0.1 to 15% by weight of monomers (C2),

wherein (C1) and (C2) in the shell add up to 100% by weight.

7. Process for producing a graft copolymer according to any of Claims 3 to 6, wherein the core of the copolymer (C) accounts for 3-20% by weight and the shell accounts for 80-97% by weight of the copolymer (C) having an agglomerating effect, wherein the total amount of core and shell adds up to 100% by weight.

8. Process for producing a graft copolymer according to any of Claims 3 to 7, wherein in step iii) the addition of (C2) is carried out 2 min after the addition of (E) in step ii) and lasts 20 min.

9. Process for producing a graft copolymer according to any of Claims 3 to 8, wherein the addition of the at least one emulsifier (E) and (C2) terminates simultaneously.

10. Process for producing a graft copolymer according to any of Claims 3 to 9, wherein the addition of the at least one emulsifier (E), (C2) and the initiator required for the polymerization of (C2) terminates simultaneously.

11. Process for producing a graft copolymer according to any of Claims 3 to 10, wherein the graft base (B1a) obtained in step (a) is agglomerated with at least one copolymer (C) having an agglomerating effect by adding 2.0 to 3.0 parts by weight, based on 100 parts by weight of the graft base (B1a), based in each case on the solids content.

12. Graft copolymer (B), obtained by a process according to any of Claims 3 to 11.

13. Thermoplastic molding composition comprising at least one thermoplastic copolymer (A) and at least one graft copolymer (B) according to Claim 12 and also optionally at least one further component K, wherein the molding composition comprises:

(A): 40 to 80% by weight of at least one thermoplastic copolymer (A) obtainable from:

(A1): 20 to 31% by weight, based on the copolymer (A), acrylonitrile, and
(A2): 69 to 80% by weight, based on the copolymer (A), styrene or a-methylstyrene or a mixture of styrene and $\alpha$-methylstyrene, wherein (A1) and (A2) add up to 100% by weight,

(B): 20 to 60% by weight of at least one graft copolymer (B); and
(K) : 0 to 5% by weight, especially 0.1 to 5% by weight further components (K),

wherein the sum total of (A), (B) and (K) is 100% by weight.

14. Thermoplastic molding composition according to Claim 13, wherein the copolymer (A) is composed of the monomers styrene and acrylonitrile and the graft copolymer is composed of butadiene, styrene and further monomers.

15. Thermoplastic molding composition according to Claim 13 or 14, wherein the molding composition additionally comprises at least one further thermoplastic polymer (TP) selected from the group of polycarbonates, polyestercarbonates, polyesters and polyamides.

16. Use of a thermoplastic molding composition according to any of Claims 13 to 15 for producing moldings, films or coatings.

**Revendications**

1. Procédé de préparation d'un copolymère (C) à action agglomérante, obtenu par

i) polymérisation de (C1) : 80 à 99,9 % en poids d'un ou plusieurs acrylates d'alkyle en $C_1$ à $C_{12}$ ou méthacrylates d'alkyle en $C_1$ à $C_{12}$ hydrophobes,
ii) ajout d'au moins un émulsifiant (E),
iii) ajout et polymérisation de (C2) : 0,1 à 20 % en poids d'un ou plusieurs comonomères hydrophiles choisis dans le groupe constitué par l'acrylamide et le méthacrylamide, (C1) et (C2) donnant 100 % en poids,

l'ajout de (C2) étant réalisé après l'ajout de (E) dans l'étape ii).

2. Copolymère (C) à action agglomérante, obtenu par un procédé selon la revendication 1.

3. Procédé pour la préparation d'un copolymère greffé (B) construit à partir :

(B1) : d'une base de greffage agglomérée (B1), obtenue par

(a) polymérisation d'au moins un monomère éthyléniquement insaturé (B10) pour donner une base de greffage (B1a), et
(b) agglomération de la base de greffage (B1a), obtenue en (a) par ajout de 0,01 à 5 parties en poids, par rapport à 100 parties en poids de la base de greffage (B1a), à chaque fois par rapport à la teneur en solides, d'au moins un copolymère (C) à action agglomérante selon la revendication 2, avec obtention de (B1),

(B2) : d'une enveloppe de greffage composée d'au moins un monomère éthyléniquement insaturé (B20), qui peut être obtenue par transformation de la base de greffage agglomérée (B1) avec l'au moins un monomère éthyléniquement insaturé (B20),

contenant les étapes de :

(I) polymérisation d'au moins un monomère éthyléniquement insaturé (B10) en émulsion aqueuse pour la préparation de la base de greffage (B1a),
(II) agglomération de la base de greffage (B1a) présente dans l'émulsion au moyen d'au moins un copolymère (C) à action agglomérante selon la revendication 2 pour la préparation de la base de greffage (B1), et ensuite
(III) polymérisation d'au moins un monomère éthyléniquement insaturé (B20) pour donner une enveloppe de greffage en émulsion aqueuse en présence de la base de greffage (B1) agglomérée.

4. Procédé pour la préparation d'un copolymère greffé (B) selon la revendication 3, construit à partir de

(B1) : 40 à 85 % en poids, par rapport à la teneur en solides du copolymère greffé B, d'une base de greffage agglomérée (B1), construite à partir d'une base de greffage (B1a), (B1) étant obtenue par

(a) polymérisation d'au moins un monomère éthyléniquement insaturé (B10) pour donner une base de greffage (B1a), et
(b) agglomération de la base de greffage (B1a), obtenue en (a) par ajout de 0,01 à 5 parties en poids, par rapport à 100 parties en poids de la base de greffage (B1a), à chaque fois par rapport à la teneur en solides, d'au moins un copolymère (C) à action agglomérante, avec obtention de (B1),

(B2) : 15 à 60 % en poids, par rapport à la teneur en solides du copolymère greffé B, d'une enveloppe de greffage composée d'au moins un monomère éthyléniquement insaturé (B20), obtenue par transformation de la base de greffage agglomérée (B1) avec l'au moins un monomère éthyléniquement insaturé (B20),

la somme totale de la base de greffage (B1) et de l'enveloppe de greffage (B2) donnant 100 % en poids, l'au moins un copolymère (C) à action agglomérante étant obtenu par

i) polymérisation de (C1) : 80 à 99,9 % en poids d'un ou plusieurs acrylates d'alkyle en $C_1$ à $C_{12}$ ou méthacrylates d'alkyle en $C_1$ à $C_{12}$ hydrophobes,
ii) ajout d'un émulsifiant (E),
iii) ajout et polymérisation de (C2) : 0,1 à 20 % en poids d'un ou plusieurs comonomères hydrophiles choisis dans le groupe constitué par l'acrylamide et le méthacrylamide, (C1) et (C2) donnant 100 % en poids,

l'ajout de (C2) étant réalisé 2 à 100 min après l'ajout de (E) dans l'étape ii).

**5.** Procédé pour la préparation d'un copolymère greffé (B) selon la revendication 3 ou 4, construit à partir de :

(B1) : 40 à 85 % en poids, par rapport à la teneur en solides du copolymère greffé (B), d'une base de greffage agglomérée (B1), construite à partir d'une base de greffage (B1a), (B1) étant obtenue par

(a) polymérisation de :

(B11) : 0 à 10 % en poids ou 0 à 21 % en poids, par rapport à la base de greffage (B1a), de styrène, et
(B12) : 90 à 100 % en poids ou 79 à 100 % en poids, par rapport à la base de greffage (B1a), de butadiène, (B11) et (B12) donnant 100 % en poids, et

(b) agglomération de la base de greffage (B1a), obtenue en (a) par ajout de 0,01 à 5 parties en poids, par rapport à 100 parties en poids de la base de greffage (B1a), à chaque fois par rapport à la teneur en solides, d'au moins un copolymère (C) à action agglomérante, avec obtention de (B1), (C) étant construit à partir de :

(C1) : 80 à 99,9 % en poids d'un ou plusieurs acrylates d'alkyle en $C_1$ à $C_{14}$ ou méthacrylates d'alkyle en $C_1$ à $C_4$ hydrophobes, et
(C2) : 0, 1 à 20 % en poids d'un ou plusieurs comonomères hydrophiles choisis dans le groupe constitué par l'acrylamide et le méthacrylamide, (C1) et (C2) donnant 100 % en poids ;

(B2) : 15 à 60 % en poids, par rapport à la teneur en solides du copolymère greffé B, d'une enveloppe de greffage composée d'au moins un monomère éthyléniquement insaturé (B20), (B20) comprenant un mélange des monomères (B21) et (B22), obtenue par transformation de la base de greffage agglomérée (B1) avec un mélange de :

(B21) 70 à 90 % en poids, par rapport à l'enveloppe de greffage (B2), de styrène, et
(B22) 10 à 30 % en poids, par rapport à l'enveloppe de greffage (B2), d'acrylonitrile et/ou de méthacrylate de méthyle, en particulier d'acrylonitrile,

la somme totale de la base de greffage (B1) et de l'enveloppe de greffage (B2) donnant 100 % en poids, le copolymère (C) à action agglomérante étant obtenu par

i) polymérisation de (C1) : 80 à 99,9 % en poids d'un ou plusieurs acrylates d'alkyle en $C_1$ à $C_4$ ou métha-crylates d'alkyle en $C_1$ à $C_4$ hydrophobes,
ii) ajout d'au moins un émulsifiant (E),
iii) ajout et polymérisation de (C2) : 0,1 à 20 % en poids d'un ou plusieurs comonomères hydrophiles choisis dans le groupe constitué par l'acrylamide et le méthacrylamide, (C1) et (C2) donnant 100 % en poids,

l'ajout de (C2) étant réalisé 2 à 100 min après l'ajout de (E) dans l'étape ii).

**6.** Procédé pour la préparation d'un copolymère greffé selon l'une quelconque des revendications 3 à 5, le copolymère (C) à action agglomérante présentant une structure de type noyau-coquille,

- le noyau étant constitué de monomères (C1), et
- la coquille étant constituée de 85 à 99,9 % en poids de monomères (C1) et 0,1 à 15 % en poids de monomères (C2),

(C1) et (C2) dans la coquille donnant 100 % en poids.

**7.** Procédé pour la préparation d'un copolymère greffé selon l'une quelconque des revendications 3 à 6, le noyau du copolymère (C) représentant 3 à 20 % en poids et la coquille représentant 80 à 97 % en poids du copolymère (C) à action agglomérante, la quantité totale du noyau et de la coquille donnant 100 % en poids.

**8.** Procédé pour la préparation d'un copolymère greffé selon l'une quelconque des revendications 3 à 7, dans lequel dans l'étape iii) l'ajout de (C2) est réalisé 2 min après l'ajout de (E) dans l'étape ii) et dure 20 min.

9. Procédé pour la préparation d'un copolymère greffé selon l'une quelconque des revendications 3 à 8, l'ajout de l'au moins un émulsifiant (E) et de (C2) se terminant en même temps.

10. Procédé pour la préparation d'un copolymère greffé selon l'une quelconque des revendications 3 à 9, l'ajout de l'au moins un émulsifiant (E), de (C2) et de l'initiateur nécessaire pour la polymérisation de (C2) se terminant en même temps.

11. Procédé pour la préparation d'un copolymère greffé selon l'une quelconque des revendications 3 à 10, la base de greffage (B1a) obtenue dans l'étape (a) étant agglomérée par ajout de 2,0 à 3,0 parties en poids, par rapport à 100 parties en poids de la base de greffage (B1a), à chaque fois par rapport à la teneur en solides, d'au moins un copolymère (C) à action agglomérante.

12. Copolymère greffé (B), obtenu par un procédé selon l'une quelconque des revendications 3 à 11.

13. Masse à mouler thermoplastique, contenant au moins un copolymère thermoplastique (A) et au moins un copolymère greffé (B) selon la revendication 12 ainsi qu'éventuellement au moins un composant supplémentaire K, la masse à mouler contenant :

(A) 40 à 80 % en poids d'au moins un copolymère thermoplastique (A) pouvant être obtenu à partir de :

(A1) : 20 à 31 % en poids, par rapport au copolymère (A), d'acrylonitrile, et
(A2) : 69 à 80 % en poids par rapport au copolymère (A), de styrène ou de $\alpha$-méthylstyrène ou d'un mélange de styrène et de $\alpha$-méthylstyrène, (A1) et (A2) donnant 100 % en poids,

(B) 20 à 60 % d'au moins un copolymère greffé (B) ; et
(K) : 0 à 5 % en poids, en particulier 0,1 à 5 % en poids d'autres composants (K), la somme de (A), (B) et (K) donnant 100 % en poids.

14. Masse à mouler thermoplastique selon la revendication 13, le copolymère (A) étant construit à partir des monomères de styrène et d'acrylonitrile et le copolymère greffé étant construit à partir de butadiène, de styrène et d'autres monomères.

15. Masse à mouler thermoplastique selon la revendication 13 ou 14, la masse à mouler contenant de plus au moins un polymère thermoplastique supplémentaire (TP), choisi dans le groupe des polycarbonates, des polyestercarbonates, des polyesters et des polyamides.

16. Utilisation d'une masse à mouler thermoplastique selon l'une quelconque des revendications 13 à 15 pour la préparation de pièces moulées, de feuilles ou de revêtements.

Figur 1

HDC - Differentielle Teilchengrößenverteilung (Vol.; %)

Durchmesser nm

FIG 1

Figur 2

HDC – Differentielle Teilchengrößenverteilung (Vol.; %)

Durchmesser nm

FIG 2

Figur 3

HDC – Differentielle Teilchengrößenverteilung (Vol.; %)

Durchmesser nm

FIG 3

Figur 4

HDC – Differentielle Teilchengrößenverteilung (Vol.; %)

Durchmesser nm

FIG 4

Figur 5

FIG 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102005022632
- DE 102005022635
- EP 0579140 A
- DE 2427960 A
- EP 0062901 A
- DE 19907136 A

**In der Beschreibung aufgeführte Nicht-Patentliteratur**

- **H.-G. KEPPLER.** *Angew. Makromol. Chem.,* 1968, vol. 2, 1-25
- **G. LAGALY.** Dispersionen und Emulsionen: eine Einführung in die Kolloidik feinverteilter Stoffe einschließlich der Tonminerale. Steinkopf-Verlag, 1997, 282
- Polystyrol. Kunststoff-Handbuch. Carl-Hanser-Verlag, 1969, vol. V, 122
- Kunststoff-Handbuch. Carl Hanser Verlag, 1973, vol. VIII, 695
- Plastics Additives Handbook. Hanser Publ, 1996
- Makromolekulare Stoffe. **HOUBEN-WEYL.** Methoden der Organischen Chemie. Thieme Verlag, 1961, 307